# NEUE EUROPÄISCHE PATENTSCHRIFT

(11) **EP 1 519 972 B2**
(45) Veröffentlichungstag und Bekanntmachung des Hinweises auf die Entscheidung über den Einspruch: **24.08.2011**
(45) Hinweis auf die Patenterteilung: 25.10.2006
(21) Anmeldenummer: 03759943.8
(22) Anmeldetag: 12.06.2003
(51) Int. Cl.: C08G 12/00, C08G 12/30, C08G 12/32, C08G 12/42, C08L 61/26, C08L 61/28, D01F 6/00

(54) **ZUSAMMENSETZUNGEN ZUR HERSTELLUNG VON AMINOPLASTERZEUGNISSEN**
COMPOSITIONS FOR PRODUCING AMINOPLAST PRODUCTS AND METHOD FOR PRODUCING PRODUCTS FROM THESE COMPOSITIONS
COMPOSITIONS DESTINEES A LA FABRICATION DE PRODUITS AMINOPLASTIQUES

(30) Priorität: 14.06.2002 AT 9042002
(43) Veröffentlichungstag der Anmeldung: 06.04.2005
(73) Patentinhaber: Borealis Agrolinz Melamine GmbH, 4021 Linz (AT)
(72) Erfinder: RÄTZSCH, Manfred, A-4073 Wilhering/Thalheim (AT); BUCKA, Hartmut, A-4622 Eggendorf (AT); BURGER, Martin, A-4020 Linz (AT)
(74) Vertreter: Gross, Felix
(86) Internationale Anmeldenummer: PCT/EP2003/006175
(87) Internationale Veröffentlichungsnummer: WO 2003/106524

(56) Entgegenhaltungen:
- EP-A- 0 200 906
- EP-A- 1 247 837
- EP-A- 1 279 686
- EP-A1- 0 044 115
- EP-A1- 0 044 155
- EP-A2- 0 704 467

## Beschreibung

Die Erfindung betrifft Zusammensetzungen zur Herstellung von Aminoplasterzeugnissen sowie durch Schmelzeverarbeitung daraus hergestellte Erzeugnisse. Ferner sind Verfahren zur Herstellung von Erzeugnissen aus den Zusammensetzungen Gegenstand der Erfindung.

Halbzeuge und Formstoffe aus Aminoplasten wie Melamin-Formaldehyd-Harze oder Melamin-Harnstoff-Formaldehyd-Harze [Ullmanns Encyclopedia of Industrial Chemistry (1987), Vol. A2, 130-131] sind bekannt. Von Nachteil bei der Herstellung von Erzeugnissen aus Melaminharzen ist die schwierige Verarbeitbarkeit nach üblichen thermoplastischen Verarbeitungsverfahren wie Extrusion, Spritzguss oder Blasformen.

Niedermolekulare Melaminharz-Vorkondensate besitzen eine zu geringe Schmelzviscosität für diese Verarbeitungsverfahren und können lediglich als hochgefüllte Formmassen bei langen Zykluszeiten unter Härtung der Erzeugnisse verarbeitet werden (Woebcken, W., Kunststoff-Handbuch Bd. 10 "Duroplaste", Carl Hanser Verl. München 1988, S. 266-274). Fasern, Schäume oder Beschichtungen aus Melaminharzen können auf Grund der niedrigen Schmelzviscosität der Melaminharzvorkondensate nur ausgehend von Lösun-gen der Melaminharzvorkondensate unter Aushärtung während der Formgebung hergestellt werden.

Übliche Härter für Aminoplaste sind starke Säuren wie Salzsäure, Schwefelsäure, p-Toluolsulfonsäure und Ameisensäure sowie Ammoniumchlorid (EP 0 657 496 A2; EP 0 523 485 A1, EP 0 799 260). Von Nachteil bei diesen Härtern ist die zu geringe Härtungsgeschwindigkeit in Zusammensetzungen mit Melaminharzvorkondensaten mit Molmassen von 300 bis 5000 bei kurzen Verweilzeiten während der Schmelzeverarbeitung der Zusammensetzungen zu Halbzeugen und Formstoffen, was zu unbefriedigenden Werkstoffeigenschaften führt.

Aufgabe der Erfindung sind Zusammensetzungen aus Melaminharzvorkondensaten und Härtern, die für die Schmelzeverarbeitung zu Aminoplasterzeugnissen geeignet sind.

Die Aufgabe wurde durch Zusammensetzungen zur Herstellung von Aminoplasterzeugnissen durch Schmelzeverarbeitung gelöst, wobei die Zusammensetzungen erfindungsgemäss aus
A) 95 bis 99,9 Masse% lösungsmittelfreien schmelzbaren Polykondensaten von Melaminharzen mit Molmassen von 300 bis 300000,
B) 0,1 bis 5 Masse% schwachen Säuren als thermoinduzierbare Härter, bestehend aus
   B1) Säurebildnern vom Typ blockierte Sulfonsäure der allgemeinen

      R₁-SO₂-O-R₂ (I)

      R₁ = unsubstituiertes oder substituiertes Aryl oder Biphenyl
      R₂ = 4-Nitrobenzyl, Pentafluorbenzyl oder 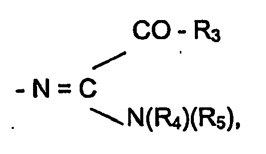 Substituenten
      wobei
      R₃ = nichtsubstituiertes oder substituiertes Alkyl oder Aryl,
      R₄ = H, C₁-C₁₂-Alkyl, Phenyl, C₂-C₉-Alkanoyl oder Benzyl,
      R₅ = H, C₁-C₁₂-Alkyl oder Cyclohexyl,
      oder R₃ und R₄ oder R₅ zusammen mit den Atomen, an die sie gebunden sind, einen 5- bis 8-gliedrigen Ring bilden, der durch 1 oder 2 Benzoreste anelliert sein kann,
   B2) C₄-C₁₈-aliphatischen und/oder C₇-C₁₈-aromatischen Carbonsäuren,
   B3) Alkalisalzen oder Ammoniumsalzen der Phosphorsäure,
   B4) C₁-C₁₂-Alkylestern oder C₂-C₈-Hydroxyalkylestern von C₇-C₁₄₋aromatischen Carbonsäuren oder anorganischen Säuren,
   B5) Salzen von Melamin oder Guanaminen mit C₁-₁₈-aliphatischen Carbonsäuren,
   B6) Anhydriden, Halbestern oder Halbamiden von C₄-C₂₀-Dicarbonsäuren,
   B7) Halbestern oder Halbamiden von Copolymeren aus ethylenisch ungesättigten C₄-C₂₀-Dicarbonsäureanhydriden und ethylenisch ungesättigten Monomeren vom Typ C₂-C₂₀-Olefine und/oder C₈-C₂₀₋Vinylaromaten, und/oder
   B8) Salzen von C₁-C₁₂-Alkylaminen bzw. Alkanolaminen mit C₁-C₁₈₋aliphatischen, C₇-C₁₄-aromatischen oder alkylaromatischen Carbonsäuren sowie anorganischen Säuren vom Typ Salzsäure, Schwefelsäure oder Phosphorsäure,
   und
C) gegebenenfalls bis zu 400 Masse% Füllstoffen und/oder Verstärkungsfasern, bis zu 30 Masse% weiteren reaktiven Polymeren vom Typ Ethylen-Copolymere, Malein-säureanhydrid-Copolymere, modifizierte Maleinsäureanhydrid-Copolymere, Poly-(meth)acrylate, Polyamide, Polyester und/oder Polyurethane, sowie bis zu 4 Masse%, jeweils bezogen auf die Polykondensate von Melaminharzen, Stabilisatoren, UV-Absorbern und/oder Hilfsstoffen, wobei die Polykondensate von Melaminharzen Mischungen aus schmelzbaren 4 bis 1000 Kern Polytriazinether, sind, wobei in den Polytriazinethern die Triazinsegmente 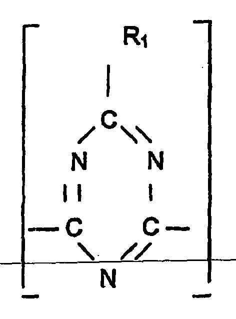 R₁ = -NH₂, -NH-CHR₂-O-R₃ ,-NH-CHR₂-O-R₄-OH, -CH₃, -C₃H₇, -C₆H₅, -OH, Phthalimido-.
   Succinimido-, -NH-CO-_{C5-C18}-Alkyl, -NH-C₅-C₁₈-Alkylen-OH,
   -NH-CHR₂-O-C₅-C₁₈-Alkylen-NH₂, -NH-C₅-C₁₈-Alkylen-NH₂,
   -NH-CHR₂-O-R₄-O-CHR₂-NH-, -NH-CHR₂-NH-, -NH-CHR₂-O-C₅-C₁₈-Alkylen-NH-,
   -NH-C₅-C₁₈-Alkylen-NH-, -NH-CHR₂-O-CHR₂NH-,
   R₂ = H, C₁-C₇ - Alkyl;
   R₃ = C₁-C₁₈ - Alkyl, H;
   R₄ = C₂-C₁₈-Alkylen, -CH(CH₃)-CH₂-O-_{C2-C12}-Alkylen-O-CH₂-CH(CH₃)-,
   -CH(CH₃)-CH₂-O-_{C2-C12}-Arylen-O-CH₂-CH(CH₃)-,
   -[CH₂-CH₂-O-CH₂-CH₂]ₙ-, -[CH₂-CH(CH₃)-O-CH₂-CH(CH₃)]ₙ -, -[-O-CH₂-CH₂₋CH₂-CH₂-]ₙ-,
   -[(CH₂)₂₋₈-O-CO-_{C6-C14}-Arylen-CO-O-(CH₂)₂₋₈-]ₙ-,
   -[(CH₂)₂₋₈-O-CO-_{C2-C12-}Alkylen-CO-O-(CH₂)₂₋₈-]ₙ -,
   wobei n = 1 bis 200;
   - Siloxangruppen enthaltende Sequenzen des Typs 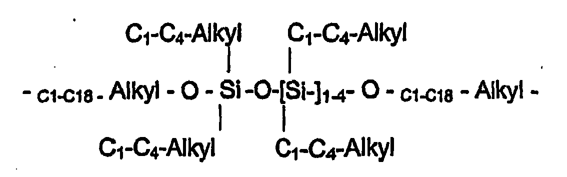
   - Siloxangruppen enthaltende Polyestersequenzen des Typs
      -[(X)ᵣ-O-CO-(Y)ₛ-CO-O-(X)ᵣ]-,
      bei denen
      X = {(CH₂)₂₋₈-O-CO-_{C6-C14-}Arylen-CO-O-(CH₂)₂₋₈-} oder -{(CH₂)₂₋₈-O-CO-_{C2-C12}-Alkylen-CO-O-(CH₂)₂₋₈-}; 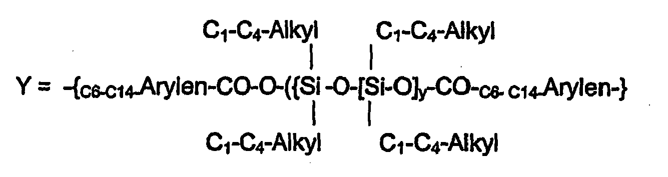 oder 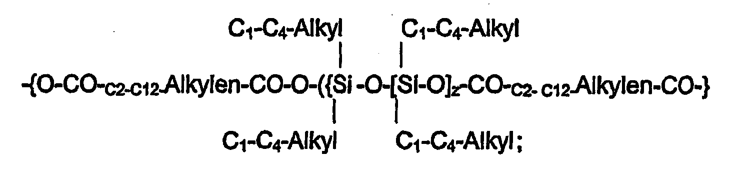 r = 1 bis 70; s = 1 bis 70 und y = 3 bis 50 bedeuten;
   - Siloxangruppen enthaltende Polyethersequenzen des Typs 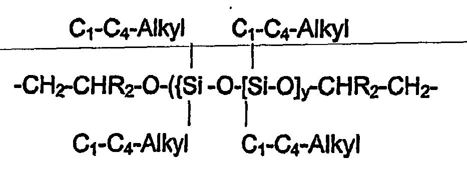 wobei R₂ = H; C₁-C₄-Alkyl und y = 3 bis 50 bedeuten;
   - Sequenzen auf Basis von Alkylenoxidaddukten des Melamins vom Typ 2-Amino-4,6-di-_{C2-C4}-alkylenamino-1,3,5-triazin - Sequenzen:
   - Phenolethersequenzen auf Basis zweiwertiger Phenole und C₂-C₈-Diolen vom Typ
      -_{C2-C8-}Alkylen-O-_{C6-C18}-Arylen-O-_{C2-C8}-Alkylen- Sequenzen;
   durch Brückenglieder -NH-CHR₂-NH- oder -NH-CHR₂-O-R₄-O-CHR₂-NH- und -NH-CHR₂-NH- sowie gegebenenfalls -NH-CHR₂-O-CHR₂-NH-, -NH-CHR₂₋O-C₅-C₁₈-Alkylen-NH- bzw. -NH-C₅-C₁₈-Alkylen-NH- zu 4- bis 1000-Kern-Polytriazinethern mit linearer und/oder verzweigter Struktur verknüpft sind, wobei in den Polytriazinethern das Molverhältnis der Substituenten R₃ : R₄ = 20 : 1 bis 1 : 20 beträgt, der Anteil der Verknüpfungen der Triazinsegmente durch Brücken-glieder -NH-CHR₃-O-R₄-O-CHR₃-NH- 5 bis 95 Mol% beträgt, und die Polytriazinether bis zu 20 Masse% Diole vom Typ HO - R₄ - OH enthalten können.
bestehen.

Beispiele für übliche Verfahren der Schmelzeverarbeitung sind Extrusion, Spritzguss oder Blasformen.

Beispiele für Aminoplasterzeugnisse, die durch Schmelzeverarbeitung hergestellt werden können, sind Platten, Rohre, Profile, Beschichtungen, Schaumstoffe, Fasern, Spritzgussteile und Hohlkörper.

Die Zusammensetzungen zur Herstellung von Aminoplasterzeugnissen können in Form von zylindrischen, linsenförmigen, pastillenförmigen oder kugelförmigen Partikeln mit einem mittleren Durchmesser von 0,5 bis 8 mm vorliegen.

Die Polykondensate von Melaminharzen mit Molmassen von 300 bis 300000 können Polykondensate sein, in denen die Triazinsequenzen durch Brückenglieder -NH-Alkylen-NH- verknüpft sind.

Als Melaminharze werden in den erfindungsgemässen Zusammensetzungen Polykondensate gemäß Anspruch 1 aus Melamin bzw. Melaminderivaten und C₁-C₈-Aldehyden mit einem Molverhältnis Melamin bzw. Melaminderivat / C₁-C₈-Aldehyden 1 : 1,5 bis 1: 5 sowie deren partielle Veretherungsprodukte bevorzugt, wobei die C₁-C₈-Aldehyde insbesondere Formaldehyd, Acetaldehyd, Trimethylolacetaldehyd, Acrolein, Furfurol, Glyoxal und/oder Glutaraldehyd, besonders bevorzugt Formaldehyd, sind.

Die Melaminharze können ebenfalls 0,1 bis 10 Masse%, bezogen auf die Summe von Melamin und Melaminderivaten, eingebaute Phenole und/oder Harnstoff enthalten. Als Phenolkomponenten sind dabei Phenol, C₁-C₉-Alkylphenole, Hydroxyphenole und/oder Bisphenole geeignet.

Die endständigen Trinzinsegmente in den Polytriazinethern sind Triazinsegmente der Struktur 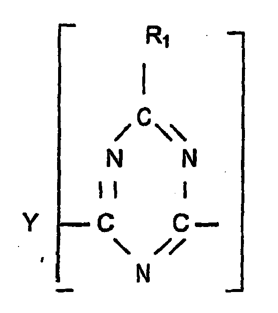 Y= -NH-CHR₂-O-R₃ ,-NH-CHR₂O-R₄-OH sowie gegebenenfalls -NH-CHR₂-O-C₅₋C₁₈-Alkylen-NH₂,
-NH-C₅-C₁₈-Alkylen-NH₂, -NH-C₅-C₁₈-Alkylen-OH,
R₁ = -NH₂, -NH-CHR₂-O-R₃ ,-NH-CHR₂-O-R₄-OH, -CH₃, -C₃H₇, -C₆H₅, -OH, Phthalimido-.
Succinimido-, -NH-CO-R₃, -NH-C₅-C₁₈-Alkylen-OH, -NH-C₅-C₁₈-Alkylen-NH₂,
-NH-CHR₂-O-C₅-C₁₈-Atkylen-NH₂,
R₂ = H, C₁-C₇ - Alkyl;
R₃ = C₁-C₁₈ - Alkyl, H;
R₄ = C₂-C₁₈-Alkylen, -CH(CH₃)-CH₂-O-_{C2-C12}-Alkylen-O-CH₂-CH(CH₃)-,
-CH(CH₃)-CH₂-O-_{C2-C12}-Arylen-O-CH₂-CH(CH₃)-,
-[CH₂-CH₂-O-CH₂-CH₂]ₙ-, -[CH₂-CH(CH₃)-O-CH₂-CH(CH₃)]ₙ-,
-[-O-CH₂-CH₂-CH₂-CH₂-]ₙ-,
-[(CH₂)₂₋₈-O-CO-_{C6-C14-}Arylen-CO-O-(CH₂)₂₋₈-]ₙ-,
-[(CH₂)₂₋₈-O-CO-_{C2-C12-}Alkylen-CO-O-(CH₂)₂₋₈-]ₙ-,
wobei n = 1 bis 200;
- Siloxangruppen enthaltende Sequenzen des Typs 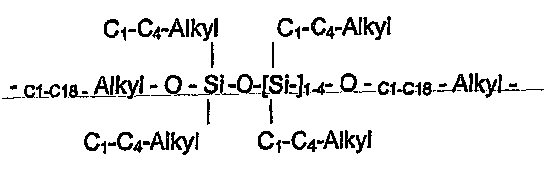
- Siloxangruppen enthaltende Polyestersequenzen des Typs -[(X)ᵣ-O-CO-(Y)ₛ-CO-O-(X)ᵣ]- ,
   bei denen
   X = {(CH₂)₂₋₈-O-CO-_{C6-C14-}Arylen-CO-O-(CH₂)₂₋₈-} oder
   -{(CH₂)₂₋₈-O-CO-_{C2-C12-}Alkylen-CO-O-(CH₂)₂₋₈-}; 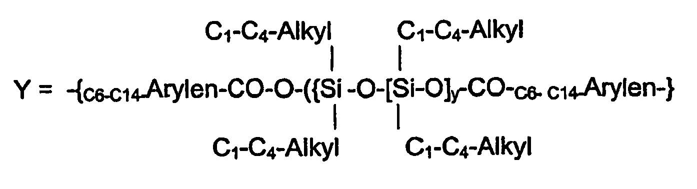 oder 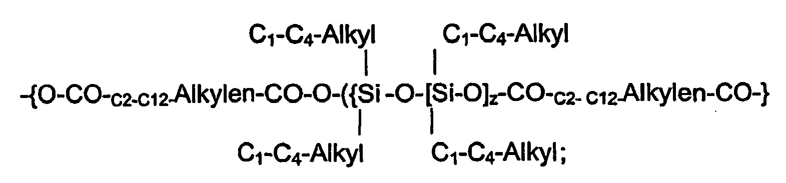 r = 1 bis 70; s = 1 bis 70 und y = 3 bis 50 bedeuten;
- Siloxangruppen enthaltende Polyethersequenzen des Typs 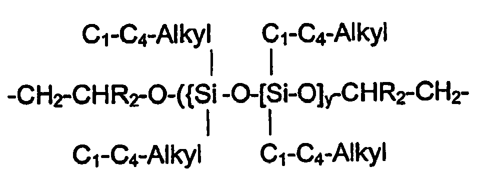 wobei R₂ = H; C₁-C₄-Alkyl und y = 3 bis 50 bedeuten;
- Sequenzen auf Basis von Alkylenoxidaddukten des Melamins vom Typ 2-Amino-4,6-di-_{C2-C4-}alkylenamino-1,3,5-triazin - Sequenzen:
- Phenolethersequenzen auf Basis zweiwertiger Phenole und C₂-C₈-Diolen vom Typ
   -_{C2-C8-}Alkylen-O-_{C6-C18}-Arylen-O-_{C2-C8}-Alkylen- Sequenzen;
   bilden.

Die bei den erfindunsgemässen Zusammensetzungen eingesetzten 4- bis 1000-Kern-Polytriazinether können durch Veretherung von Melaminharzvorkondensaten mit C₁-C₄-Alkoholen, gegebenenfalls unter nachfolgender partieller Umetherung mit C₄-C₁₈-Alkoholen, C₂-C₁₈-Diolen, mehrwertigen Alkoholen vom Typ Glycerin oder Pentaerythrit, C₅-C₁₈-Aminoal-koholen, Polyalkylenglycolen, Hydroxyendgruppen enthaltenden Polyestern, Siloxan-polyestern, Siloxanpolyethern, Melamin-Alkylenoxid-Addukten und/oder Zweikernphenol-Alkylenoxidaddukten und/oder Umsetzung mit C₅-C₁₈-Diaminen und/oder Bisepoxiden, und nachfolgende thermische Kondensation der modifizierten Melaminharzkondensate in der Schmelze im kontinuierlichen Kneter bei Temperaturen von 140 bis 220°C hergestellt werden.

Die Melaminharzvorkondensate, die bei der Herstellung der 4- bis 1000-Kern-Oligotri-azinether eingesetzt werden, sind bevorzugt Vorkondensate, die als C₁₋C₈-Aldehyd-Komponenten Formaldehyd, Acetaldehyd und/oder Trimethylolacetaldehyd und als Melaminkomponente neben Melamin ebenfalls Acetoguanamin und/oder Benzoguanamin enthalten können. Besonders bevorzugt werden Vorkondensate aus Melamin und Formaldehyd mit einem Molverhältnis Melamin/Formaldehyd 1:1,5 bis 1: 3.

Bevorzugt sind die in den Zusammensetzungen enthaltenen Polykondensate von Melaminharzen Mischungen aus schmelzbaren 4- bis 300-Kern-Polytriazinethern.

Die thermoinduzierbaren Härter vom Typ blockierte Sulfonsäure der allgemeinen Formel

R₁-SO₂-O-R₂ (I)

in den Zusammensetzungen zur Herstellung von Aminoplasterzeugnissen sind bevorzugt blockierte Sulfonsäuren, in denen die Substituenten
R₁ = unsubstituiertes oder durch einen oder mehrere der Substituenten Halogen, C₁-C₄-Halogenalkyl, C₁-C₁₆-Alkyl, C₁-C₄-Alkoxy, C₁-C₄-Alkyl-CO-NH-, Phenyl-CO-NH-, Benzoyl- oder Nitro- substituiertes C₆-C₁₀-Aryl oder C₇-C₁₂₋Arylalkyl,
R₂ = 4-Nitrobenzyl, Pentafluorbenzyl, 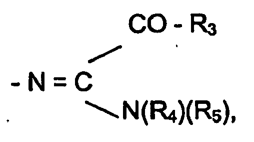 R₃ = C₁-C₁₂-Alkyl, C₁-C₄-Halogenalkyl, C₂-C₆-Alkenyl, C₅-C₁₂-Cycloalkyl, unsubstituiertes oder durch einen oder mehrere der Substituenten Halogen, C₁-C₄-Halogenalkyl, C₁-C₁₆-Alkyl, C₁-C₄-Alkoxy, C₁-C₄-Alkyl-CO-NH-, Phenyl-CO-NH-, Benzoyl oder Nitro- substituiertes C₆-C₁₀-Aryl und/oder C₇₋C₁₂-Arylalkyl, C₁-C₈-Alkoxy, C₅-C₈-Cycloalkoxy, Phenoxy oder H₂N-CO-NH-,-CN, C₂-C₅-Alkyloyl, Benzoyl, C₂-C₅-Alkoxycarbonyl, Phenoxycarbonyl, Morpholino-, Piperidino-, C₁-C₁₂-Alkyl, C₁-C₄-Halogenalkyl, C₂-C₆-Alkenyl, C₅-C₁₂-Cycloalkyl, unsubstituiertes oder durch einen oder mehrere der Substituenten Halogen, C₁-C₄-Halogenalkyl, C₁-C₁₆-Alkyl, C₁-C₄-Alkoxy, C₁₋C₄-Alkyl-CO-NH-, Phenyl-CO-NH-, Benzoyl oder Nitro- substituiertes C₆₋C₁₀-Aryl, C₇-C₁₂-Arylalkyl, C₁-C₈-Alkoxy, C₅-C₈-Cycloalk-oxy-, Phenoxy-, oder H₂N-CO-NH-,
R₄ = H, C₁-C₁₂-Alkyl, Phenyl, C₂-C₉-Alkanoyl oder Benzyl
R₅= H, C₁-C₁₂-Alkyl oder Cyclohexyl, sind,
oder R₃ und R₄ oder R₅ zusammen mit den Atomen, an die sie gebunden sind, einen 5- bis 8-gliedrigen Ring bilden, der durch 1 oder 2 Benzoreste anelliert sein kann.

Beispiele für bevorzugte blockierte Sulfonsäuren sind Benzilrnonoxim-tosylat, Benzil-monoxim-p-dodecylbenzolsulfonat, 4-Nitroacetophenonoximtosylat, α-Tosyloxyiminocapronsäureethylester, α-Cyclohexylsulfonyloxyiminophenylessigsäureethylester, α-(4-Chlorphenylsulfonyloxyümino)capronsäurephenylester, 4,4-Dimethylbenzilmonoxim-tosy-lat, Dibenzylketonoxim-tosylat, Acetonoxim-p-benzoylbenzolsulfonat, α-Tetralonoxim-tosylat, Anthrachinonmonoxim-tosylat, Thioxanthonoxim-tosylat, α-(p-Toluolsulfonyloxyimino)benzylcyanid, α-(4-Nitrobenzolsulfonyloxyimino)benzylcyanid, α-(Benzolsulfonyl-oxyimino)-4-chlorbenzylcyanid, α-(Benzolsulfoxyimino)-2,6-dichlorbenzylcyanid, α-(2-Chlorberizolsulfonyloxyimino)-4-methoxybenzylcyanid, 4-Chlor-α-trifluor-acetophenon-oxim-benzolsulfonat, Fluorenoxim-tosylat, α-(Benzolsulfonyloxyimino)ureidocarbonyl-ace-tonitril, α-(p-Toluolsulfonyloxyimino)-benzoylacetonitril, 2,3-Dihydro-1,4-naphthochinon-monoxim-tosylat, Acetophenonoximtosylat, Chromanoximtosylat, 2-Nitrobenzylsulfonat, 2,6-Dinitrobenzylbenzolsulfonat, 4-Nitrobenzyl-9,10-dimethoxyanthracen-2-sutfonat, 2-Methylsulfonyloxyimino-4-phenyl-but-3-ennitril, 4-Cyclohex-1-enyl-2-methylsulfonyl-oxyi-mino-but-3-ennitril, 4-Furan-2-yl-isopropylsulfonyloxyimino-but-3-ennitril und 2-Penta-fluorophenylsulfonyloxyimino-4-phenyl-but-3-ennitril.

Beispiele für aliphatische C₄-C₁₈-Carbonsäuren, die in den erfindungsgemässen Rezep-turen als thermoinduzierbare Härter enthalten sein können, sind Buttersäure, Capronsäure, Palmitinsäure, Stearinsäure und Ölsäure.

Beispiele für aromatische C₇-C₁₈-Carbonsäuren, die in den erfindungsgemässen Rezepturen als thermoinduzierbare Härter enthalten sein können, sind Benzoesäure, Phthal-säure oder Naphthalindicarbonsäure.

Beispiele für Alkalisalze oder Ammoniumsalze der Phosphorsäure, die in den erfin-dungsgemässen Zusammensetzungen als thermoinduzierbare Härter enthalten sein können, sind Ammoniumhydrogenphosphat, Natriumpolyphosphat und Kaliumhydrogenphosphat.

Die C₁-C₁₂-Alkylester bzw. C₂-C₈-Hydroxyalkylester von C₇-C₁₄-aromatischen Carbonsäuren in den Zusammensetzungen zur Herstellung von Aminoplasterzeugnissen sind bevorzugt Dibutylphthalat, Phthalsäurediglycolester und/oder Trimellithsäureglycolester.

In den Zusammensetzungen zur Herstellung von Aminoplasterzeugnissen sind die Salze von Melamin bzw. Guanaminen mit C₁₋₁₈-aliphatischen Carbonsäuren bevorzugt Melamin-formiat, Melamincitrat, Melaminmaleat, Melaminfumarat und/oder Acetoguanaminbutyrat.

In den Zusammensetzungen zur Herstellung von Aminoplasterzeugnissen sind die als thermoinduzierbare Härter eingesetzten Anhydride, Halbester oder Halbamide von C₄-C₂₀-Dicarbonsäuren bevorzugt Maleinsäureanhydrid, Bernsteinsäureanhydrid, Phthalsäureanhydrid, Mono-C₁-C₁₈-alkylmaleate, Maleinsäuremonoamid oder Maleinsäuremono-C₁-C₁₈-alkyl-amide.

Beispiele für Mono-C₁-C₁₈-alkylmaleate sind Maleinsäuremonobutylester, Maleinsäure-monoethylhexylester oder Monostearylmaleat.

Beispiele für Maleinsäuremono-C₁-C₁₈-alkyl-amide sind Maleinsäuremonoethylamid, Maleinsäuremonooctylamid oder Maleinsäuremonostearylamid.

In den Zusammensetzungen zur Herstellung von Aminoplasterzeugnissen sind die als thermoinduzierbare Härter eingesetzten Halbester oder Halbamide von Copolymeren aus ethylenisch ungesättigten C₄-C₂₀-Dicarbonsäureanhydriden und ethylenisch ungesättigten Monomeren vom Typ C₂-C₂₀-Olefine und/oder C₈-C₂₀₋Vinylaromaten bevorzugt Halbester oder Halbamide von Copolymeren aus Maleinsäureanhydrid und C₃-C₈-α-Olefinen vom Typ lsobuten, Diisobuten und/oder 4-Methylpenten und/oder Styren mit einem Molverhältnis Maleinsäureanhydrid/C₃-C₈-α-Olefin bzw. Styren bzw. entsprechender Monomermischungen von 1 : 1 bis 1 : 5.

In den Zusammensetzungen zur Herstellung von Aminoplasterzeugnissen sind die Salze von C₁-C₁₂-Alkylaminen bzw. Alkanolaminen mit C₁-C₈-aliphatischen, C₇₋C₁₂-aromatischen bzw. alkylaromatischen Carbonsäuren oder anorganischen Säuren vom Typ Salzsäure, Schwefelsäure oder Phosphorsäure bevorzugt Ethanolammmoniumchlorid, Triethylammoniummaleat, Diethanolammoniumphosphat und/oder lsopropylammonium-p-toluotsulfonat.

Beispiele für geeignete Füllstoffe, die in den Zusammensetzungen zur Herstellung von Aminoplasterzeugnissen bis zu 400 Masse%, bezogen auf die Vorkondensate von Melaminharzen, enthalten sein können, sind Al₂O₃, Al(OH)₃, Bariumsulfat, Calciumcarbonat, Glaskugeln, Kieselerde, Glimmer, Quarzmehl, Schiefermehl, Mikrohohlkugeln, Russ, Talkum, Gesteinsmehl, Holzmehl, Cellulosepulver und/oder Schalen- und Kemmehle wie Erdnussschalenmehl oder Olivenkernmehl. Bevorzugt werden als Füllstoffe Schichtsilikate vom Typ Montmorillonit, Bentonit, Kaolinit, Muskovit, Hectorit, Fluorhectorit, Kanemit, Revdit, Grumantit, llerit, Saponit, Beidelit, Nontronit, Stevensit, Laponit, Taneolit, Vermiculit, Halloysit, Volkonskoit, Magadit, Rectorit, Kenyait, Sauconit, Borfluorphlogopite und/oder synthetische Smectite.

Beispiele für geeignete Verstärkungsfasern, die in den Zusammensetzungen zur Herstellung von Aminoplasterzeugnissen bis zu 400 Masse%, bezogen auf die Vorkondensate von Melaminharzen, enthalten sein können, sind anorganische Fasern, insbesondere Glasfasern und/oder Kohlenstofffasern, Naturfasern, insbesondere Cellulosefasern wie Flachs, Jute, Kenaf und Holzfasern, und/oder Kunststofffasern, insbesondere Fasern aus Polyacrylnitril, Polyvinylalkohol, Polyvinylacetat, Polypropylen, Polyestern und/oder Polyamiden.

Beispiele für reaktive Polymere vom Typ Ethylen-Copolymere, die in den Zusammensetzungen zur Herstellung von Aminoplasterzeugnissen bis zu 30 Masse%, bezogen auf die Vorkondensate von Melaminharzen, enthalten sein können, sind teilverseifte Ethylen-Vinylacetat-Copolymere, Ethylen-Butylacrylat-Acrylsäure-Copolymere, Ethylen-Hydroxy-ethylacrylat-Copolymere oder Ethylen-Butylacrylat-Glycidylmethacrylat-Copolymere.

Beispiele für reaktive Polymere vom Typ Maleinsäureanhydrid-Copolymere, die in den Zusammensetzungen zur Herstellung von Aminoplasterzeugnissen bis zu 30 Masse%, bezogen auf die Vorkondensate von Melaminharzen, enthalten sein können, sind C₂-C₂₀-Olefin - Maleinsäureanhydrid-Copolymere oder Copolymere aus Maleinsäureanhydrid und C₈-C₂₀-Vinylaromaten.

Beispiele für die C₂-C₂₀-Olefin - Komponenten, die in den Maleinsäureanhydrid-Copolyme-ren enthaltenen sein können, sind Ethylen, Propylen, Buten-1, Isobuten, Diisobuten, Hexen-1, Octen-1, Hepten-1, Penten-1, 3-Methylbuten-1, 4-Methylpenten-1, Methylethylpenten-1, Ethylpenten-1, Ethylhexen-1, Octadecen-1 und 5,6-Dimethylnorbornen.

Beispiele für die C₈-C₂₀-Vinylaromaten - Komponenten, die in den Maleinsäureanhydrid-Copolymeren enthaltenen sein können, sind Styren, α-Methylstyren, Dimethylstyren, Iso-propenylstyren, p-Methylstyren und Vinylbiphenyl.

Die in den Zusammensetzungen zur Herstellung von Aminoplasterzeugnissen gegebenenfalls enthaltenen modifizierten sind bevorzugt partiell oder vollständig veresterte, amidierte bzw. imidierte Maleinsäureanhydrid-Copolymere.

Besonders geeignet sind modifizierten Copolymere aus Maleinsäureanhydrid und C₂-C₂₀-Olefinen bzw. C₈-C₂₀-Vinylaromaten mit einem Molverhältnis von 1 : 1 bis 1 : 9 und Mol-massen-Gewichtsmitteln von 5000 bis 500000, die mit Ammoniak, C₁₋C₁₈-Monoalkylaminen, C₆-C₁₈-aromatischen Monoaminen, C₂-C₁₈₋Monoaminoalkoholen, monoaminier-ten Poly(C₂-C₄-alkylen)oxiden einer Molmasse von 400 bis 3000, und/oder monover-etherten Poly(C₂-C₄₋alkylen)oxiden einer Molmasse von 100 bis 10000 umgesetzt worden sind, wobei das Molverhältnis Anhydridgruppen Copolymer / Ammoniak, Aminogruppen C₁₋C₁₈-Monoalkylamine, C₆-C₁₈-aromatische Monoamine, C₂-C₁₈-Monoaminoalkohole bzw. monoaminiertes Poly-(C₂-C₄-alkylen)oxid und/oder Hydroxygruppen Poly(C₂₋C₄-alky-len)oxid 1 : 1 bis 20 : 1 beträgt.

Beispiele für reaktive Polymere vom Typ Poly(meth)acrylate, die in den Zusammensetzungen zur Herstellung von Aminoplasterzeugnissen bis zu 30 Masse%, bezogen auf die Vorkondensate von Melaminharzen, enthalten sein können, sind Copolymere auf Basis von funktionellen ungesättigten (Meth)acrylatmonomeren wie Acrylsäure, Hydroxyethylacrylat, Glycidylacrylat, Methacrylsäure, Hydroxybutylmethacrylat, oder Glycidylmethacrylat und nichtfunktionellen ungesättigten (Meth)acrylatmonomeren wie Ethylacrylat, Butylacrylat, Ethylhexylacrylat, Methylmethacrylat, Ethylacrylat und/oder Butylmethacrylat und/oder C₈-C₂₀-Vinylaromaten. Bevorzugt werden Copolymere auf Basis Methacrylsäure, Hydroxyethylacrylat, Methylmethacrylat und Styren.

Beispiele für reaktive Polymere vom Typ Polyamide, die in den Zusammensetzungen zur Herstellung von Aminoplasterzeugnissen bis zu 30 Masse%, bezogen auf die Vorkondensate von Melaminharzen, enthalten sein können, sind Polyamid-6, Polyamid-6,6, Polyamid-11, Polyamid-12, Polyaminoamide aus Polycarbonsäuren und Polyalkylen-aminen sowie die entsprechenden methoxylierten Polyamide.

Beispiele für reaktive Polymere vom Typ Polyester, die in den Zusammensetzungen zur Herstellung von Aminoplasterzeugnissen bis zu 30 Masse%, bezogen auf die Vorkondensate von Melaminharzen, enthalten sein können, sind Polyester mit Molmassen von 2000 bis 15000 aus gesättigten Dicarbonsäuren wie Phthalsäure, Isophthalsäure, Adipinsäure und/oder Bernsteinsäure, ungesättigten Dicarbonsäuren wie Maleinsäure, Fumarsäure und/oder Itakonsäure und Diolen wie Ethylenglycol, Butandiol, Neopentylglycol und/oder Hexandiol. Bevorzugt werden verzweigte Polyester auf Basis von Neopentylglycol, Trimethylolpropan, Isophthalsäure und Azelainsäure.

Beispiele für reaktive Polymere vom Typ Polyurethane, die in den Zusammensetzungen zur Herstellung von Aminoplasterzeugnissen bis zu 30 Masse%, bezogen auf die Vorkondensate von Melaminharzen, enthalten sein können, sind unvernetzte Polyurethane auf Basis von Toluylendiisocyanat, Diphenylmethandiisocyanat, Butandiisocyanat und/oder Hexandiisocyanat als Diisocyanatkomponenten und Butandiol, Hexandiol und/oder Polyalkylenglycolen als Diolkomponenten mit Molmassen von 2000 bis 30000.

Beispiele für geeignete Stabilisatoren und UV-Absorber, die in den Zusammensetzungen zur Herstellung von Aminoplasterzeugnissen bis zu 2 Masse%, bezogen auf die Vorkonden-sate von Melaminharzen, enthalten sein können, sind Piperidinderivate, Benzophenon-derivate, Benzotriazolderivate, Triazinderivate und/oder Benzofuranonderivate.

Beispiele für geeignete Hilfsstoffe, die in den Zusammensetzungen zur Herstellung von Aminoplast-erzeugnissen bis zu 4 Masse%, bezogen auf die Vorkondensate von Melaminharzen, enthalten sein können, sind Verarbeitungshilfsmittel wie Calciumstearat, Magnesiumstearat und/oder Wachse.

Erfindungsgemäss ist weiterhin ein Verfahren zur Herstellung von Erzeugnissen aus den vorbeschriebenen Zusammensetzungen zur Herstellung von Aminoplasterzeugnissen, hergestellt durch Schmelzeverarbeitung, wobei die Zusammensetzungen in kontinuierlichen Knetern bei Massetemperaturen von 105 bis 220 °C und Verweilzeiten von 2 bis 12 min aufgeschmolzen werden und unter Aushärtung der schmelzbaren Polykondensate von Melaminharzen nach üblichen Verarbeitungsverfahren für thermoplastische Polymere
A) als Schmelze auf einen Glättwerk aufgegeben und als Platte über Transportbänder abgezogen und geschnitten oder auf Flächenbahnen aus Metallfolien, Kunststoffolien, Papierbahnen oder Textilbahnen aufgesiegelt und als Mehrkomponentenverbunde abgezogen und konfektioniert werden,
   oder
B) über eine Profildüse ausgetragen und als Profil oder Plattenmaterial abgezogen, geschnitten und konfektioniert werden,
   oder
C) über eine Ringdüse ausgetragen, unter Einpressen von Luft als Rohr abgezogen, geschnitten und konfektioniert werden,
   oder
D) nach Eindosierung von Treibmitteln über eine Breitschlitzdüse ausgetragen und als geschäumtes Plattenmaterial abgezogen werden,
   oder
E) über die Breitschlitzdüse einer Rohrbeschichtungsanlage ausgetragen und schmelz-flüssig auf das rotierende Rohr aufgesiegelt werden,
   oder
F) in Spritzgussmaschinen, bevorzugt mit Dreizonenschnecken einer Schneckenlänge von 18 bis 24 D, hohen Einspritzgeschwindigkeiten und bei Werkzeugtemperaturen von 5 bis 70°C, zu Spritzgussformteilen verarbeitet werden, oder
G) in Schmelzespinnanlagen mittels Schmelzepumpe durch das Kapillarwerkzeug in den Blasschacht extrudiert und als Fäden abgezogen oder nach dem Melt-Blow-Verfahren als Fasern abgetrennt, oder als Schmelze nach dem Rotationsspinnverfahren in eine Scherfeldkammer mit organischen Dispergiermitteln unter Bildung von Faserfibriden ausgetragen, und in Nachfolgeeinrichtungen weiterverarbeitet werden,
   oder
H) nach dem Harzinfusionsverfahren in eine offene Form mit dem Faserhalbzeug dosiert und nach der Vacuumsacktechnologie zu Laminaten ausgeformt werden, oder
I) nach dem Harzinjektionsverfahren in eine verriegelbare Form, in dem sich Preforms aus textilem Material befinden, injiziert werden und zu Bauteilen ausgeformt und ausgehärtet werden,
   oder
K) zur Schmelzeimprägnierung von nach dem Wickelverfahren, Flechtverfahren oder Pultrusionsverfahren hergestellter Bauteilrohlinge eingesetzt werden,
und die Erzeugnisse gegebenenfalls zur vollständigen Aushärtung einer thermischen Nachbehandlung bei Temperaturen von 180 bis 220°C und Verweilzeiten von 30 bis 120 min unterzogen werden.

Für die Herstellung von Erzeugnissen aus den erfindungsgemässen Zusammensetzungen, die Füllstoffe, Verstärkungsfasern, weitere reaktive Polymere, Stabilisatoren, UV-Absorber und/oder Hilfsstoffe enthalten, können Zusammensetzungen eingesetzt werden, in denen diese Komponenten bereits enthalten sind, oder die Komponenten werden bei der Verarbeitung der Zusammensetzungen zugesetzt.

Für das Aufschmelzen der erfindungsgemässen Zusammensetzungen sind als kontinuierliche Kneter Extruder mit Kurzkompressionsschnecken oder Dreizonenschnecken mit UD = 20-40 geeignet. Bevorzugt werden 5-Zonen-Schnecken mit Einzugszone, Kompressionszone, Scherzone, Dekompressionszone und Homogenisierungszone. Schnecken mit Schnitttiefen von 1 : 2,5 bis 1 : 3,5 sind bevorzugt geeignet. Besonders günstig ist die Zwischenschaltung von statischen Mischern oder Schmelzepumpen zwischen Zylinder und Düse.

Günstige Massetemperaturen für die aufgeschmolzenen Zusammensetzungen bei der Verarbeitung nach der Glättwerktechnologie zu Platten oder Beschichtungen oder bei der Herstellung von Platten, Profilen oder Rohren durch Austrag aus einer Profildüse liegen im Bereich von 110 bis 150°C.

Bei der Herstellung von geschäumtem Plattenmaterial durch Austrag über eine Breitschlitzdüse können Zusammensetzungen eingesetzt werden, die gasabspaltende Treibmittel wie Natriumhydrogencarbonat, Azodicarbonamid, Zitronensäure/Bicarbonat-Treibsysteme und/oder Cyanursäuretrihydrazid enthalten, oder in die Schmelze werden vor dem Austrag leichtflüchtige Kohlenwasserstoffe wie Pentan, Isopentan, Propan und/oder Isobutan, oder Gase wie Stickstoff, Argon und/oder Kohlendioxid dosiert. Günstige Düsentem-peraturen für den Austrag der Treibmittel-enthaltenden Schmelze sind 110 bis 175°C. Bevorzugte Schaumdichten der Schäume aus den erfindungsgemässen Zusammensetzungen liegen im Bereich von 10 bis 500 kg/m².

Für die Extrusionsbeschichtung von Metallrohren sind Massetemperaturen der Schmelzen der Zusammensetzungen von 135°C bis 220°C und eine Vorwärmung des Rohrmaterials auf 100 bis 160°C erforderlich.

Vorzugsweise werden bei der Herstellung von Spritzgusserzeugnissen aus den erfindungsgemässen Zusammensetzungen Spritzgussmaschinen mit Spritzeinheiten eingesetzt, die Dreizonenschnecken mit einer Schneckenlänge von 18 bis 24 D besitzen. Die Einspritzgeschwindigkeit bei der Herstellung der durch Spritzgiessen erzeugten Formteile soll möglichst hoch eingestellt werden, um Einfallstellen und schlechte Bindenähte auszuschliessen.

Bei der Herstellung von Fasererzeugnissen aus den erfindungsgemässen Zusammensetzungen werden zur gleichmässigen Schmelzedosierung der im Plastifizierextruder aufgeschmolzenen Zusammensetzungen über den Schmelzeverteiler zum Kapillarwerkzeug bevorzugt Diphenyl-beheizte Schmelzepumpen für die auf 120-240°C erhitzten Schmelzen eingesetzt.

Die Herstellung von Filamentgarnen aus den erfindungsgemässen Zusammensetzungen kann in Kurzspinnanlagen durch Abzug der Fäden mit Hilfe schnelllaufender Galetten und Weiterverarbeitung in Nachfolgeeinrichtungen aus Nachhärtungskammer, Reckeinrichtung und Wickler erfolgen.

Fasern oder Vliese als Erzeugnisse aus den erfindungsgemässen Zusammensetzungen können ebenfalls nach dem Melt-Blow-Verfahren durch Applizierung eines hocherhitzten Luftstroms um die Kapillardüsenöffnungen bei der Extrusion der Fäden aus dem Kapillarwerkzeug in den Blasschacht hergestellt werden. Der Luftstrom verstreckt den geschmolzenen Faden unter gleichzeitiger Zerteilung in viele Einzelfäserchen mit Faserdurchmessem von 0,5 bis 12 µm. Eine Weiterverarbeitung der auf dem Siebtransportband abgelegten Fasern zu Vliesen kann durch Applikation von Thermobondier- oder Vernadelungsprozessen zur Erzielung der erforderlichen Festigkeit und Dimensionsstabilität erfolgen.

Faserverstärkte Kunststoffe nach dem Harzinfusionsverfahren können durch lmpräg-nierung der Faserhalbzeuge durch die unter Umgebungsdruck stehende Schmelze der erfindungsgemässen Zusammensetzung, die in den evakuierten Vakuumsack gedrückt wird, unter Einsatz einer offenen Form hergestellt werden.

Flächige oder komplex geformte Bauteile nach dem Harzinjektionsverfahren werden durch Einlegen von Preforms aus nichtimprägnierten Textilien in eine verriegelbare Form, Injizierung der Schmelze der erfindungsgemässen Zusammensetzung, und Aushärtung hergestellt.

Rotationssymmetrische Bauteile nach dem Wickelverfahren, komplexe Bauteile nach der Rundflechttechnik oder Profile nach der Pultrusionstechnik lassen sich durch Tränkung der Faserrohlinge in Form von Rohren, Fittings, Behältern oder Profilen mit der Schmelze der erfindungsgemässen Zusammensetzung herstellen.

Die Erfindung wird durch folgende Beispiele erläutert :

### Beispiel 1

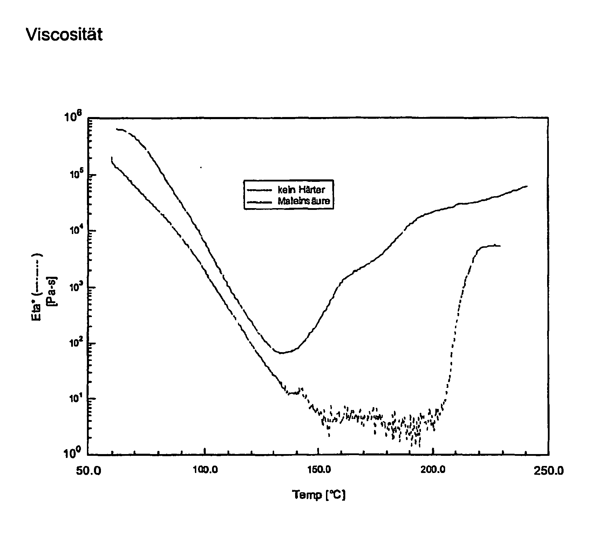

Als schmelzbares Melaminharz-Polykondensat in der Zusammensetzung wird ein Polytriazinether aus Melamin und Formaldehyd mit einem Verhältnis Melamin/Formaldehyd von 1:3 verwendet. Die Methylolgruppen sind überwiegend durch Methanol verethert, so dass der Gehalt des Harzes an Methoxygruppen 20 Masse% beträgt. Die Molmasse des Poly-triazinethers beträgt rund 2000 g/mol. Das schmelzbare Melaminharz-Polykondensat wird mit 1 Masse% Maleinsäure, bezogen auf das Melaminharz-Polykondensat, als thermoinduzierbarer Härter versetzt, und der Härtungsverlauf der Zusammensetzung mittels Dynamisch-Mechanischer-Analyse charakterisiert. Die Analysen wurden an einem RDS-Gerät der Firma Rheometric Scientific durchgeführt. Die Zusammensetzungen wurden von 60°C auf 300°C mit einer Heizrate von 10 K/min aufgeheizt und der Viskositätsverlauf bestimmt. Als Onset wurde die Temperatur bestimmt, ab der ein starker Anstieg der Viskosität zu beobachten ist (Abbildung 1).
Die Onsettemperatur der Zusammensetzung beträgt 135°C. Im Vergleichsversuch ohne thermo-induzierbaren Härter beträgt die Onsettemperatur 200°C.

### Beispiele 2 bis 9:

Versuchsdurchführung analog Beispiel 1, anstelle Maleinsäureanhydrid als thermoinduzierbarer Härter wurden die in Tabelle 1 angegebenen Härter verwendet :

| Beispiel | Härter | Onsettemperatur (°C) |
|---|---|---|
| | | |
| 2 | Phthalsäure | 155 |
| 3 | Maleinsäureanhydrid | 110 |
| 4 | Phthalsäureanhydrid | 126 |
| 5 | Maleinsäuremonobutylester | 130 |
| 6 | Maleinsäuremonoamid | 140 |
| 7 | Melaminmaleat | 145 |
| | | |
| 8 | *p*-Toluolsulfonsäure | 200 |
| 9 | ohne | 200 |

Im Vergleichsversuch 8 wurde p-Toluolsulfonsäure als starke Säure als thermoinduzierbarer Härter eingesetzt. Die Zusammensetzung mit der starken Säure ergibt eine um 45 bis 90°C höhere Onsettemperatur gegenüber den erfindungsgemässen Zusammensetzungen bzw. die gleiche Onsettemperatur wie in Zusammensetzungen ohne thermoinduzierbaren Härter (Vergleichsversuch 9).

### Beispiel 10

Als Melaminharz wird ein mit einem Ethylenglycol-Diether von Bisphenol A (Simulsol BPLE, Seppic S.A., Frankreich) umgeethertes Melamin-Formaldehyd-Vorkondensat auf Basis 2,4,6-Tris-methoxymethylamino-1,3,5-triazin eingesetzt. Die durch GPC ermittelte Molmasse beträgt 1800, der Gehalt an nichtumgesetztem Simulsol BPLE nach HPLC-Analyse (Lösung in THF, UV-Detektion mit extemem Standard) beträgt 14 Masse%. Der Anteil der -OCH₃₋Gruppen im umgeetherten Melaminharz (Ermittlung durch GC-Analyse nach Spaltung des Polytriazinethers mit Mineralsäure) beträgt 14,5 Masse%. Die Viskosität bei 140°C liegt bei 800 Pas.

Die Umetherung des Melamin-Formaldehyd-Vorkondensats auf Basis 2,4,6-Tris-methoxymethylamino-1,3,5-triazin und weitere Kondensation findet bei 220°C im Laborextruder GL 27 D44 mit Vakuumentgasung (Leistritz) bei einem Temperaturprofil von 100°C/130°C/130°C/200°C/200°C/200°C/200°C/200°C/200°C/100°C/100°C und einer durchschnittlichen Verweilzeit von 2,5 min statt. Die Extruderdrehzahl beträgt 150 min⁻¹. In die Einzugszone des Extruders werden 2,4,6-Tris-methoxymethylamino-1,3,5-triazin mit 1,38 kg/h und der Ethylenglykol-Diether von Bisphenol A mit 1,13 kg/h mittels Seitenstromdosierung gravimetrisch dosiert. Der aus dem Extruder austretende Strang des Polytriazinethers wird in einem Granulator geschnitten.
Das umgeetherte Harz wird mit 1 Masse% Maleinsäure compoundiert und von diesem Compound der Härtungsverlauf mittels Dynamisch-Mechanischer-Analyse analog Beispiel 1 bestimmt. Die Onsettemperatur beträgt in diesem Beispiel 125°C.

### Beispiel 11-14:

Versuchsdurchführung analog Beispiel 10, es wurden die in Tabelle 2 angegebenen Härter verwendet:

| Beispiel | Härter | Onsettemperatur °C |
|---|---|---|
| 10 | Maleinsäure | 125 |
| 11 | Maleinsäureanhydrid | 116 |
| 12 | Phthalsäureanhydrid | 121 |
| 13 | *p*-Toluolsulfonsäure | 170 |
| 14 | ohne | 180 |

### Abbildung 1

Härtungsverläufe in den Zusammensetzungen nach Beispiel 1 ohne thermoinduzierbaren Härter und mit 1 Masse% Maleinsäure, bezogen auf das Melaminharz-Polykondensat, als thermoinduzierbaren Härter

## Patentansprüche

1. Zusammensetzungen zur Herstellung von Aminoplasterzeugnissen durch Schmelzeverarbeitung, **dadurch gekennzeichnet, dass** die Zusammensetzungen aus
A) 95 bis 99,9 Masse% lösungsmittelfreien schmelzbaren Polykondensaten von Melaminharzen mit Molmassen von 300 bis 300000,
B) 0,1 bis 5 Masse% schwachen Säuren als thermoinduzierbare Härter, bestehend aus
B1) Säurebildnern vom Typ blockierte Sulfonsäure der allgemeinen Formel (I)
R₁- SO₂-O- R₂ (I)
R₁ = unsubstituiertes oder substituiertes Aryl oder Biphenyl
R₂ = 4-Nitrobenzyl, Pentafluorbenzyl oder 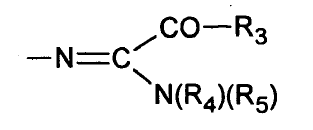
Substituenten
wobei
R₃ = nichtsubstituiertes oder substituiertes Alkyl oder Aryl,
R₄ = H, C₁-C₁₂-Alkyl, Phenyl, C₂-C₉-Alkanoyl oder Benzyl,
R₅ = H, C₁-C₁₂-Alkyl oder Cyclohexyl,
oder R₃ und R₄ oder R₅ zusammen mit den Atomen, an die sie gebunden sind, einen 5- bis 8-gliedrigen Ring bilden, der durch 1 oder 2 Benzoreste anelliert sein kann,
B2) C₄-C₁₈-aliphatischen und/oder C₇-C₁₈-aromatischen Carbonsäuren,
B3) Alkalisalzen oder Ammoniumsalzen der Phosphorsäure,
B4) C₁-C₁₂-Alkylestern oder C₂-C₈-Hydroxyalkylestern von C₇-C₁₄-aromatischen Carbonsäuren oder anorganischen Säuren,
B5) Salzen von Melamin oder Guanaminen mit C₁-₁₈-aliphatischen Carbonsäuren,
B6) Anhydriden, Halbestern oder Halbamiden von C₄-C₂₀-Dicarbonsäuren,
B7) Halbestern oder Halbamiden von Copolymeren aus ethylenisch ungesättigten C₄-C₂₀-Dicarbonsäureanhydriden und ethylenisch ungesättigten Monomeren vom Typ C₂-C₂₀-Olefine und/oder C₈-C₂₀-Vinylaromaten,
und/oder
B8) Salzen von C₁-C₁₂-Alkylaminen bzw. Alkanolaminen mit C₁-C₁₈-aliphatischen, C₇-C₁₄-aromatischen oder alkylaromatischen Carbonsäuren sowie anorganischen Säuren vom Typ Salzsäure, Schwefelsäure oder Phosphorsäure, und
C) gegebenenfalls bis zu 400 Masse% Füllstoffen und/oder Verstärkungsfasern, bis zu 30 Masse% weiteren reaktiven Polymeren vom Typ Ethylen-Copolymere, Maleinsäureanhydrid-Copolymere, modifizierte Maleinsäureanhydrid-Copolymere, Poly(meth)acrylate, Polyamide, Polyester und/oder Polyurethane, sowie bis zu 4 Masse%, jeweils bezogen auf die Polykondensate von Melaminharzen, Stabilisatoren, UV-Absorbern und/oder Hilfsstoffen,
wobei die Polykondensate von Melaminharzen Mischungen aus schmelzbaren 4- bis 1000-Kern-Polytriazinethern sind, wobei in den Polytriazinethern die Triazinsegmente 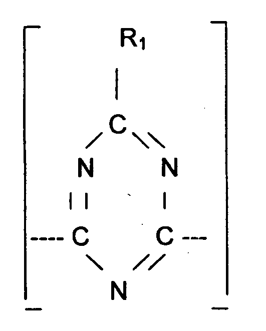
R₁ = -NH₂, -NH-CHR₂-O-R₃ ,-NH-CHR₂-O-R₄-OH, -CH₃, -C₃H₇, -C₆H₅, -OH, Phthalimido-, Succinimido-, -NH-CO-C₅-C₁₈-Alkyl, -NH-C₅-C₁₈-Alkylen-OH, -NH-CHR₂-O-C₅-C₁₈-Alkylen-NH₂, -NH-C₅-C₁₈-Alkylen-NH₂, -NH-CHR₂-O-R₄-O-CHR₂-NH-, -NH-CHR₂-NH-, -NH-CHR₂-O-C₅-C₁₈-Alkylen-NH-, -NH-C₅-C₁₈-Alkylen-NH-, -NH-CHR₂-O-CHR₂-NH-,
R₂= H, C₁-C₇ - Alkyl;
R₃ = C₁-C₁₈ - Alkyl, H;
R₄ = C₂-C₁₈-Alkylen, -CH(CH₃)-CH₂-O-_{C2-C12}-Alkylen-O-CH₂-CH(CH₃)-, -CH(CH₃)-CH₂-O-_{C2-C12}-Arylen-O-CH₂-CH(CH₃)-, -[CH₂-CH₂-O-CH₂-CH₂]ₙ-, -[CH₂-CH(CH₃)-O-CH₂-CH(CH₃)]ₙ-, -[-O-CH₂-CH₂-CH₂-CH₂-]ₙ-, -[(CH₂)₂-₈-O-CO-C₆-C₁₄Arylen-CO-O-(CH₂)₂-₈-]ₙ-, -[(CH₂)₂₋₈-O-CO-C₂-C₁₂Alkylen-CO-O-(CH₂)₂₋₈-]ₙ-, wobei n = 1 bis 200;
- Siloxangruppen enthaltende Sequenzen des Typs 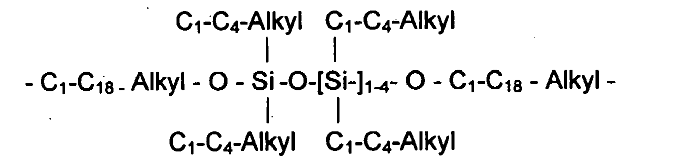
- Siloxangruppen enthaltende Polyestersequerizen des Typs -[(X)ᵣ-O-CO-(Y)ₛ-CO-O-(X)ᵣ]-, bei denen
X = {(CH₂)₂₋₈-O-CO-C₆-C₁₄Arylen-CO-O-(CH₂)₂₋₈-} oder -{(CH₂)₂-₈-O-CO-C₂-C₁₂-Alkylen-CO-O-(CH₂)₂-₈-}; 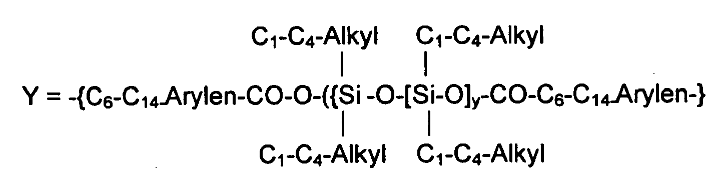 oder 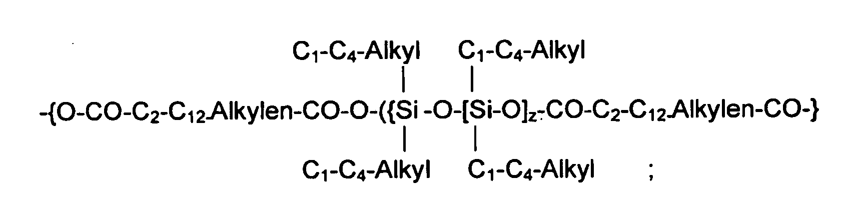 r = 1 bis 70; s = 1 bis 70 und y = 3 bis 50 bedeuten;
- Siloxangruppen enthaltende Polyethersequenzen des Typs 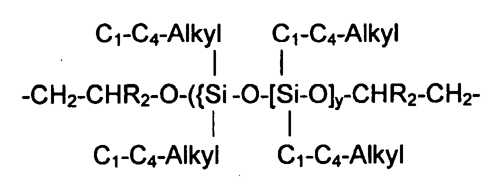 wobei R₂ = H; C₁-C₄-Alkyl und y = 3 bis 50 bedeuten;
- Sequenzen auf Basis von Alkylenoxidaddukten des Melamins vom Typ 2-Amino-4,6-di-C₂-C₄-alkylenamino-1,3,5-triazin - Sequenzen:
- Phenolethersequenzen auf Basis zweiwertiger Phenole und C₂-C₈-Diolen vom Typ
-C₂-C₈-Alkylen-O-C₆-C₁₈-Arylen-O-C₂-C₈-Alkylen-Sequenzen;
durch Brückenglieder -NH-CHR₂-NH- oder -NH-CHR₂-O-R₄-O-CHR₂-NH- und -NH-CHR₂-NH- sowie gegebenenfalls -NH-CHR₂-O-CHR₂-NH-, -NH-CHR₂-O-C₅-C₁₈-Alkylen-NH- bzw. -NH-C₅-C₁₈-Alkylen-NH- zu 4- bis 1000-Kern-Polytriazinethern mit linearer und/oder verzweigter Struktur verknüpft sind,
wobei in den Polytriazinethern das Molverhältnis der Substituenten R₃ : R₄ = 20 : 1 bis 1 : 20 beträgt, der Anteil der Verknüpfungen der Triazinsegmente durch Brückenglieder -NH-CHR₃-O-R₄-O-CHR₃-NH- 5 bis 95 Mol% beträgt, und die Polytriazinether bis zu 20 Masse% Diole des Typs HO - R₄ - OH enthalten können.

2. Zusammensetzungen nach Anspruch 1, **dadurch gekennzeichnet, dass** die polykondensate von Melaminharzen Mischungen aus schmelzbaren 4- bis 300-Kern-Polytriazinethern sind.

3. Zusammensetzungen nach Anspruch 1, **dadurch gekennzeichnet, dass** die thermoinduzierbaren Härter vom Typ blockierte Sulfonsäure der allgemeinen Formel
R₁-SO₂-O-R₂ (I)
blockierte Sulfonsäuren sind, in denen die Substituenten
R₁ = unsubstituiertes oder durch einen oder mehrere der Substituenten Halogen, C₁-C₄-Halogenalkyl, C₁-C₁₆-Alkyl, C₁-C₄-Alkoxy, C₁-C₄-Alkyl-CO-NH-, Phenyl-CO-NH-, Benzoyl- oder Nitro- substituiertes C₆-C₁₀-Aryl oder C₇-C₁₂-Arylalkyl,
R₂ = 4-Nitrobenzyl, Pentafluorbenzyl, 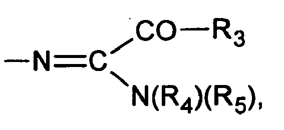
R₃ = C₁-C₁₂-Alkyl, C₁-C₄-Halogenalkyl, C₂-C₆-Alkenyl, C₅-C₁₂-Cycloalkyl, unsubstituiertes oder durch einen oder mehrere der Substituenten Halogen, C₁-C₄-Halogenalkyl, C₁-C₁₆-Alkyl, C₁-C₄-Alkoxy, C₁-C₄-Alkyl-CO-NH-, Phenyl-CO-NH-, Benzoyl oder Nitro- substituiertes C₆-C₁₀-Aryl und/oder C₇-C₁₂-Arylalkyl, C₁-C₈-Alkoxy, C₅-C₈-Cycloalkoxy, Phenoxy oder H₂N-CO-NH-, -CN, C₂-C₅-Alkyloyl, Benzoyl, C₂C₅-Alkoxycarbonyl, Phenoxycarbonyl, Morpholino-, Piperidino-, C₁-C₁₂-Alkyl, C₁-C₄-Halogenalkyl, C₂-C₆-Alkenyl, C₅-C₁₂-Cycloalkyl, unsubstituiertes oder durch einen oder mehrere der Substituenten Halogen, C₁-C₄-Halogenalkyl, C₁-C₁₆-Alkyl, C₁-C₄-Alkoxy, C₁-C₄-Alkyl-CO-NH-, Phenyl-CO-NH-, Benzoyl oder Nitro- substituiertes C₆-C₁₀-Aryl, C₇-C₁₂-Arylalkyl, C₁-C₈-Alkoxy, C₅-C₈-Cycloalk-oxy-, Phenoxy-, oder H₂N-CO-NH-,
R₄ = H, C₁-C₁₂-Alkyl, Phenyl, C₂-C₉-Alkanoyl oder Benzyl
R₅ = H, C₁-C₁₂-Alkyl oder Cyclohexyl,
oder R₃ und R₄ oder R₅ zusammen mit den Atomen, an die sie gebunden sind, einen 5- bis 8-gliedrigen Ring bilden, der durch 1 oder 2 Benzoreste anelliert sein kann.

4. Zusammensetzungen nach Anspruch 1, **dadurch gekennzeichnet, dass** die C₁-C₁₂-Alkylester bzw. C₂-C₈-Hydroxyalkylester von C₇-C₁₄-aromatischen Carbonsäuren Dibutylphthalat, Phthalsäurediglycolester und/oder Trimellithsäureglycolester sind.

5. Zusammensetzungen nach Anspruch 1, **dadurch gekennzeichnet, dass** die Salze von Melamin bzw. Guanaminen mit C₁₋₁₆-aliphatischen Carbonsäuren Melaminformiat, Melamincitrat, Melaminmaleat, Melaminfumarat und/oder Acetoguanaminbutyrat sind.

6. Zusammensetzungen nach Anspruch 1, **dadurch gekennzeichnet, dass** die Anhydride, Halbester oder Halbamide von C₄-C₂₀-Dicarbonsäuren Maleinsäureanhydrid, Bernsteinsäureanhydrid, Phthalsäureanhydrid, Mono-C₁-C₁₈-alkyl-maleate, Maleinsäuremonoamid oder Maleinsäuremono-C₁-C₁₈-alkylamide sind.

7. Zusammensetzungen nach Anspruch 1, **dadurch gekennzeichnet, dass** die Halbester oder Halbamide von Copolymeren aus ethylenisch ungesättigten C₄-C₂₀-Dicarbonsäureanhydriden und ethylenisch ungesättigten Monomeren vom Typ C₂-C₂₀-Olefine und/oder C₈-C₂₀-Vinylaromaten Halbester oder Halbamide von Copolymeren aus Maleinsäureanhydrid und C₃-C₈-α-Olefinen vom Typ Isobuten, Diisobuten und/oder 4-Methylpenten und/ oder Styren mit einem Molverhältnis Maleinsäureanhydrid/C₃-C₈-α-Olefin bzw. Styren bzw. entsprechender Monomermischungen von 1 : 1 bis 1 : 5 sind.

8. Zusammensetzungen nach Anspruch 1, **dadurch gekennzeichnet, dass** die Salze von C₁-C₁₂-Alkylaminen bzw. Alkanolaminen mit C₁-C₁₈-aliphatischen, C₇-C₁₄-aromatischen bzw. alkylaromatischen Carbonsäuren oder anorganischen Säuren vom Typ Salzsäure, Schwefelsäure oder Phosphorsäure Ethanotammmoniumchlorid, Triethylammonium-maleat, Diethanolammoniumphosphat und/oder Isopropylammonium-p-toluolsulfonat sind.

9. Verfahren zur Herstellung von Erzeugnissen aus den Zusammensetzungen nach einem oder mehreren der Ansprüche 1 bis 8, hergestellt durch Schmelzeverarbeitung, wobei die Zusammensetzungen in kontinuierlichen Knetern bei Massetemperaturen von 105 bis 220 °C und Verweilzeiten von 2 bis 12 min aufgeschmolzen werden und unter Aushärtung der schmelzbaren Polykondensate von Melaminharzen nach üblichen Verarbeitungsverfahren für thermoplastische Polymere
A) als Schmelze auf einen Glättwerk aufgegeben und als Platte über Transportbänder abgezogen und geschnitten oder auf Flächenbahnen aus Metallfolien, Kunststoffolien, Papierbahnen oder Textilbahnen aufgesiegelt und als Mehrkomponentenverbunde abgezogen und konfektioniert werden,
oder
B) über eine Profildüse ausgetragen und als Profil oder Plattenmaterial abgezogen, geschnitten und konfektioniert werden,
oder
C) über eine Ringdüse ausgetragen, unter Einpressen von Luft als Rohr abgezogen, geschnitten und konfektioniert werden,
oder
D) nach Eindosierung von Treibmitteln über eine Breitschlitzdüse ausgetragen und als geschäumtes Plattenmaterial abgezogen werden,
oder
E) über die Breitschlitzdüse einer Rohrbeschichtungsanlage ausgetragen und schmelz-flüssig auf das rotierende Rohr aufgesiegelt werden,
oder
F) in Spritzgussmaschinen, bevorzugt mit Dreizonenschnecken einer Schneckenlänge von 18 bis 24 D, hohen Einspritzgeschwindigkeiten und bei Werkzeugtemperaturen von 5 bis 70 °C, zu Spritzgussformteilen verarbeitet werden, oder
G) in Schmelzespinnanlagen mittels Schmelzepumpe durch das Kapillarwerkzeug in den Blasschacht extrudiert und als Fäden abgezogen oder nach dem Melt-Blow-Verfahren als Fasern abgetrennt, oder als Schmelze nach dem Rotationsspinnverfahren in eine Scherfeldkammer mit organischen Dispergiermitteln unter Bildung von Faserfibriden ausgetragen, und in Nachfolgeeinrichtungen weiterverarbeitet werden,
oder
H) nach dem Harzinfusionsverfahren in eine offene Form mit dem Faserhalbzeug dosiert und nach der Vacuumsacktechnologie zu Laminaten ausgeformt werden, oder
I) nach dem Harzinjektionsverfahren in eine verriegelbare Form, in dem sich Preforms aus textilem Material befinden, injiziert werden und zu Bauteilen ausgeformt und ausgehärtet werden,
oder
K) zur Schmeizeimprägnierung von nach dem Wickelverfahren, Flechtverfahren oder Pultrusionsverfahren hergestellter Bauteilrohlinge eingesetzt werden, und die Erzeugnisse gegebenenfalls zur vollständigen Aushärtung einer thermischen Nachbehandlung bei Temperaturen von 180 bis 220 °C und Verweilzeiten von 30 bis 120 min unterzogen werden.

## Claims

1. Compositions for producing amino resin products by melt processing, **characterized in that** the compositions are composed of
A) from 95 to 99.9% by mass of solvent-free meltable polycondensates of melamine resins having molar masses of 300 to 300 000,
B) from 0.1 to 5% by mass of weak acids as thermoinducible curing agents, composed of
B1) acid formers of the type of blocked sulphonic acid of the general formula (I)
R₁-SO₂-O-R₂ (I)
R₁ = unsubstituted or substituted aryl or biphenyl
R₂ = 4-nitrobenzyl, pentafluorobenzyl or 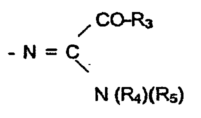 substituents
where
R₃ = non-substituted or substituted alkyl or aryl,
R₄ = H, C₁-C₁₂-alkyl, phenyl, C₂-C₉-alkanoyl or benzyl,
R₅ = H, C₁-C₁₂-alkyl or cyclohexyl,
or R₃ and R₄ or, R₅ together with the atoms to which they are attached form a 5- to 8-membered ring which can be fused by 1 or 2 benzo radicals,
B2) C₄-C₁₈ aliphatic and/or C₇-C₁₈ aromatic carboxylic acids,
B3) alkali metal salts or ammonium salts of phosphoric acid,
B4) C₁-C₁₂-alkyl esters or C₂-C₈-hydroxyalkyl esters of C₇-C₁₄ aromatic carboxylic acids or inorganic acids,
B5) salts of melamine or guanamines with C₁₋₁₈ aliphatic carboxylic acids,
B6) anhydrides, monoesters or monoamides of C₄-C₂₀ dicarboxylic acids,
B7) monoesters or monoamides of copolymers of ethylenically unsaturated C₄-C₂₀ dicarboxylic anhydrides and ethylenically unsaturated monomers of the type of C₂-C₂₀ olefins and/or C₈-C₂₀ vinylaromatics, and/or
B8) salts of C₁-C₁₂-alkylamines and/or alkanolamines with C₁-C₁₈ aliphatic, C₇-C₁₄ aromatic or alkylaromatic carboxylic acids and also inorganic acids of the type of hydrochloric acid, sulphuric acid or phosphoric acid, and
C) if desired, up to 400% by mass of fillers and/or reinforcing fibres, up to 30% by mass of other reactive polymers of the ethylene copolymer, maleic anhydride copolymer, modified maleic anhydride copolymer, poly(meth)acrylate, polyamide, polyester and/or polyurethane type, and up to 4% by mass, based in each case on the melamine resin polycondensates, of stabilizers, UV absorbers and/or auxiliaries,
wherein the melamine resin polycondensates are mixtures of meltable 4- to 1 000-nucleus polytriazine ethers, wherein in the polytriazine ethers the triazine segments 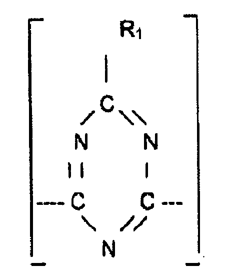
R₁ = -NH₂, -NH-CHR₂-O-R₃, -NH-CHR₂-O-R₄-OH, -CH₃, -C₃H₇, -C₆H₅, -OH, phthalimido-, succinimido-, -NH-CO-C₅-C₁₈-alkyl, -NH-C₅-C₁₈-alkylene-OH, -NH-CHR₂-O-C₅-C₁₈-alkylene-NH₂,
-NH-C₅-C₁₈-alkylene-NH₂,
-NH-CHR₂-O-R₄-O-CHR₂-NH-, -NH-CHR₂-NH-,
-NH-CHR₂-O-C₅-C₁₈-alkylene-NH-,
-NH-C₅-C₁₈-alkylene-NH-, -NH-CHR₂-O-CHR₂-NH-,
R₂ = H, C₁-C₇-alkyl;
R₃ = C₁-C₁₈-alkyl, H;
R₄ = C₂-C₁₈-alkylene,
-CH(CH₃)-CH₂-O-C₂-C₁₂-alkylene-O-CH₂CH(CH₃)-,
-CH(CH₃)-CH₂-O-C₂-C₁₂-arylene-O-CH₂-CH(CH₃)-,
-[CH₂-CH₂-O-CH₂-CH₂]ₙ-,
-[CH₂-CH(CH₃)-O-CH₂-CH(CH₃)]ₙ-,
-[-O-CH₂-CH₂-CH₂-CH₂-]ₙ-,
-[(CH₂)₂₋₈-O-CO-C₆-C₁₄-arylene-CO-O-(CH₂)₂₋₈-]ₙ-,
-[(CH₂)₂₋₈-O-CO-C₂-C₁₂-alkylene-CO-O-(CH₂)₂₋₈-]ₙ-,
where n = 1 to 200;
- sequences containing siloxane groups, of the type 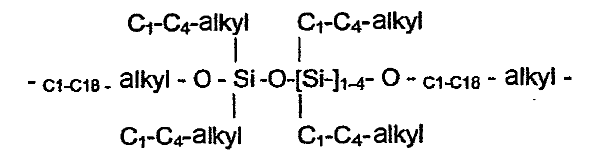
- polyester sequences containing siloxane groups, of the type
-[(X)ᵣ-O-CO-(Y)ₛ-CO-O-(X)ᵣ]-,
in which
X ={(CH₂)₂₋₈-O-CO-C₆-C₁₄-arylene-CO-O-(CH₂)₂₋₈-} or
-{(CH₂)₂₋₈-O-CO-C₂-C₁₂-alkylene-CO-O-(CH₂)₂₋₈-}; 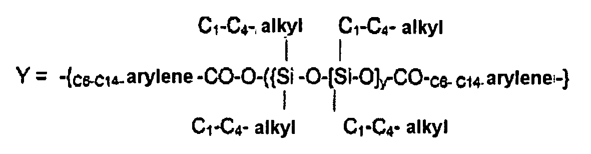 or 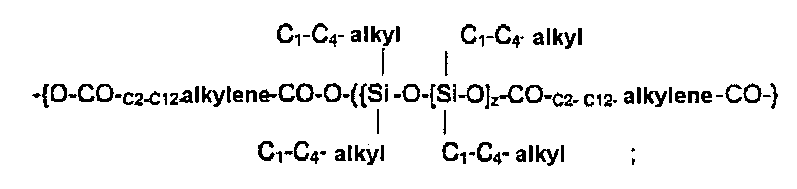 r = 1 to 70; s = 1 to 70 and y = 3 to 50;
- polyether sequences containing siloxane groups, of the type 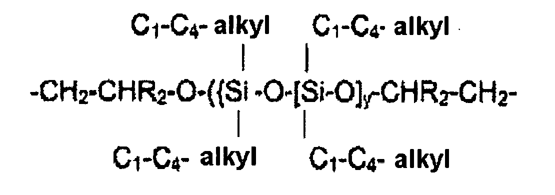 where R₂ = H; C₁-C₄-alkyl and y = 3 to 50;
- sequences based on alkylene oxide adducts of melamine, of the type of 2-amino-4,6-di-C₂-C₄-alkyleneamino-1,3,5-triazine sequences;
- phenol ether sequences based on dihydric phenols and C₂-C₈ diols, of the type of -C₂-C₈-alkylene-O-C₆-C₁₈-arylene-O-C₂-C₈-alkylene- sequences;
are linked by bridge members -NH-CHR₂-NH- or -NH-CHR₂-O-R₄-O-CHR₂-NH- and -NH-CHR₂-NH- and also, where appropriate, -NH-CHR₂-O-CHR₂-NH-, -NH-CHR₂-O-C₅-C₁₈-alkylene-NH- or -NH-C₅-C₁₈-alkylene-NH- to form 4- to 1 000-nucleus polytriazine ethers with a linear and/or branched structure,
in the polytriazine ethers the molar ratio of the substituents R₃:R₄ = 20:1 to 1:20, the proportion of the linkages of the triazine segments through bridge members -NH-CHR₃-O-R₄-O-CHR₃-NH- being from 5 to 95 mol%, and it being possible for the polytriazine ethers to contain up to 20% by mass of diols of the type HO-R₄-OH.

2. Compositions according to Claim 1, **characterized in that** the melamine resin polycondensates are mixtures of meltable 4- to 300-nucleus polytriazine ethers.

3. Compositions according to Claim 1, **characterized in that** the thermoinducible curing agents of the type of blocked sulphonic acid of the general formula
R₁-SO₂-O-R₂ (I)
are blocked sulphonic acids in which the substituents
R₁ = unsubstituted or singly or multiply halogen-, C₁-C₄-haloalkyl-, C₁-C₁₆-alkyl-, C₁-C₄-alkoxy-, C₁-C₄-alkyl-CO-NH-, phenyl-CO-NH-, benzoyl- and/or nitro- substituted C₆-C₁₀-aryl or C₇-C₁₂-arylalkyl,
R₂ = 4-nitrobenzyl, pentafluorobenzyl, 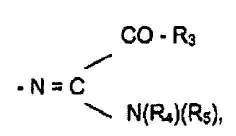
R₃ = C₁-C₁₂-alkyl, C₁-C₄-haloalkyl, C₂-C₆-alkenyl, C₅-C₁₂-cycloalkyl, unsubstituted or singly or multiply halogen-, C₁-C₄-haloalkyl-, C₁-C₁₆-alkyl-, C₁-C₄-alkoxy-, C₁-C₄-alkyl-CO-NH-, phenyl-CO-NH-, benzoyl- or nitro-substituted C₆-C₁₀-aryl and/or C₇-C₁₂-arylalkyl, C₁-C₈-alkoxy, C₅-C₈-cycloalkoxy, phenoxy or H₂N-CO-NH-, -CN, C₂-C₅-alkyloyl, benzoyl, C₂-C₅-alkoxycarbonyl, phenoxycarbonyl, morpholino-, piperidino-, C₁-C₁₂-alkyl, C₁-C₄-haloalkyl, C₂-C₆-alkenyl, C₅-C₁₂-cycloalkyl, unsubstituted or singly or multiply halogen-, C₁-C₉-haloalkyl-, C₁-C₁₆-alkyl-, C₁-C₄-alkoxy-, C₁-C₄-alkyl-CO-NH-, phenyl-CO-NH-, benzoyl- or nitro-substituted C₆-C₁ₒ-aryl, C₇-C₁₂-arylalkyl, C₁-C₈-alkoxy, C₅-C₈-cycloalkoxy-, phenoxy-, or H₂N-CO-NH-,
R₄ = H, C₁-C₁₂-alkyl, phenyl, C₂-C₉-alkanoyl or benzyl
R₅ = H, C₁-C₁₂-alkyl or cyclohexyl,
or R₃ and R₄ or R₅ together with the atoms to which they are attached form a 5- to 8-membered ring which can be fused by 1 or 2 benzo radicals.

4. Compositions according to Claim 1, **characterized in that** the C₁-C₁₂-alkyl esters and/or C₂-C₈-hydroxyalkyl esters of C₇-C₁₄ aromatic carboxylic acids are dibutyl phthalate, phthalic acid diglycol esters and/or trimellitic acid glycol esters.

5. Compositions according to Claim 1, **characterized in that** the salts of melamine and/or guanamines with C₁-₁₆ aliphatic carboxylic acids are melamine formate, melamine citrate, melamine maleate, melamine fumarate and/or acetoguanamine butyrate.

6. Compositions according to Claim 1, **characterized in that** the anhydrides, monoesters or monoamides of C₄-C₂₀ dicarboxylic acids are maleic anhydride, succinic anhydride, phthalic anhydride, mono-C₁-C₁₈-alkyl maleates, maleic monoamide or maleic mono-C₁-C₁₈-alkylamides.

7. Compositions according to Claim 1, **characterized in that** the monoesters or monoamides of copolymers of ethylenically unsaturated C₄-C₂₀ dicarboxylic anhydrides and ethylenically unsaturated monomers of the type of C₂-C₂₀ olefins and/or C₈-C₂₀ vinylaromatics are monoesters or monoamides of copolymers of maleic anhydride and C₃-C₈ α-olefins of the isobutene, diisobutene and/or 4-methylpentene and/or styrene type with a maleic anhydride/C₃-C₈ α-olefin and/or styrene and/or corresponding monomer mixtures molar ratio of 1:1 to 1:5.

8. Compositions according to Claim 1, **characterized in that** the salts of C₁-C₁₂-alkylamines and/or alkanolamines with C₁-C₁₈ aliphatic, C₇-C₁₄ aromatic and/or alkylaromatic carboxylic acids or inorganic acids of the hydrochloric acid, sulphuric acid or phosphoric acid type are ethanolammonium chloride, triethylammonium maleate, diethanolammonium phosphate and/or isopropylammonium p-toluenesulphonate.

9. Process for producing products from the compositions according to one or more of Claims 1 to 8, produced by melt processing, wherein the compositions are melted in continuous compounders at melt temperatures of 105 to 220°C and residence times of 2 to 12 min and, with curing of the meltable melamine resin polycondensates, by customary processing methods for thermoplastic polymers,
A) are applied as a melt to a smoothing unit and taken off as sheet via conveyor belts and cut or are applied to and sealed on sheet webs comprising metal foils, polymeric films, paper webs or textile webs and are taken off as multi-component composites and finished,
or
B) are discharged through a profile die and taken off as profile or sheet material, cut and finished,
or
C) are discharged through an annular die, taken off as pipe, with injection of air, cut and finished, or
D) following the introduction of blowing agents, are discharged through a slot die and taken off as foamed sheet material,
or
E) are discharged through the slot die of a pipe sheathing unit and applied in liquid melt form to, and sealed on, the rotating pipe,
or
F) in injection moulding machines, preferably with three-section screws with a screw length of 18 to 24 D, at high injection rates and at mould temperatures of 5 to 70°C, are processed to injection mouldings, or
G) in melt spinning units are extruded by means of the melt pump through the capillary die into the blowing shaft and taken off as filaments or separated off by the melt-blow process as fibres, or discharged as a melt by the rotational spinning process into a shear field chamber using organic dispersants, to form fibrids, and processed further in downstream installations,
or
H) are metered by the resin infusion process into an open mould with the semi-finished fibre product and shaped to laminates by the vacuum bag technology, or
I) are injected by the resin injection process into a lockable mould in which there are preforms of textile material, and are shaped to components and cured,
or
K) are used for the melt impregnation of component blanks produced by the filament winding process, braiding process or pultrusion process, and for full curing where appropriate the products are subjected to a thermal aftertreatment at temperatures of 180 to 220°C and residence times of 30 to 120 min.

## Revendications

1. Compositions destinées à la production de produits aminoplastes par mise en oeuvre à l'état fondu, **caractérisées en ce que** les compositions sont composées
A) de 95 à 99,9 % en masse de polycondensats fusibles, exempts de solvant, de résines mélaminiques présentant des masses molaires de 300 à 300000,
B) de 0,1 à 5 % en masse d'acides faibles en tant qu'agents de durcissement thermo-inductibles, composés
B1) des agents formant des acides du type acide sulfonique bloqué de formule générale (I)
R₁-SO₂-O-R₂ (I)
R₁ = un aryle ou un biphényle non substitué ou substitué
R₂ = des substituants 4-nitrobenzyle, pentafluorobenzyle ou 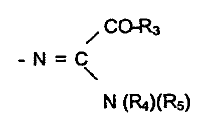 où
R₃ = un alkyle ou un aryle non substitué ou substitué,
R₄ = un H, un alkyle en C₁-C₁₂, un phényle, un alcanoyle en C₂-C₉ ou un benzyle,
R₅ = un H, un alkyle en C₁-C₁₂ ou un cyclohexyle,
ou R₃ et R₄ ou R₅, conjointement avec les atomes auxquels ils sont liés, forment un noyau à 5-8 chaînons, qui peut être condensé par 1 ou 2 radicaux benzo,
B2) des acides carboxyliques aliphatiques en C₄-C₁₈ et/ou aromatiques en C₇-C₁₈,
B3) des sels de métaux alcalins ou des sels d'ammonium de l'acide phosphorique,
B4) des esters alkyliques en C₁-C₁₂ ou des esters C₂-C₈-hydroxyalkyliques d'acides carboxyliques aromatiques en C₇-C₁₄ ou des acides inorganiques,
B5) des sels de mélamine ou de guanamines avec des acides carboxyliques aliphatiques en C₁-C₁₈,
B6) des anhydrides, des mono-esters ou des mono-amides d'acides dicarboxyliques en C₄-C₂₀,
B7) des mono-esters ou des mono-amides de copolymères d'anhydrides dicarboxyliques en C₄-C₂₀ éthyléniquement insaturés et de monomères éthyléniquement insaturés du type oléfines en C₂-C₂₀ et/ou composés vinylaromatiques en C₈-C₂₀, et/ou
B8) des sels de C₁-C₁₂-alkylamines ou d'alcanolamines avec des acides carboxyliques aliphatiques en C₁-C₁₈, aromatiques en C₇-C₁₄ ou alkylaromatiques ainsi que des acides inorganiques du type acide chlorhydrique, acide sulfurique ou acide phosphorique, et
C) éventuellement de jusqu'à 400 % en masse de charges et/ou de fibres de renforcement, jusqu'à 30 % en masse de polymères réactifs supplémentaires du type copolymères d'éthylène, copolymères d'anhydride maléique, copolymères d'anhydride maléique modifiés, poly(méth)acrylates, polyamides, polyesters et/ou polyuréthanes, ainsi que jusqu'à 4 % en masse, dans chaque cas par rapport aux polycondensats de résines mélaminiques, d'agents stabilisants, d'agents absorbant les UV et/ou d'auxiliaires,
où les polycondensats de résines mélaminiques sont des mélanges d'éthers polytriaziniques fusibles à 4-1000 noyaux,
où dans les éthers polytriaziniques, les segments triaziniques 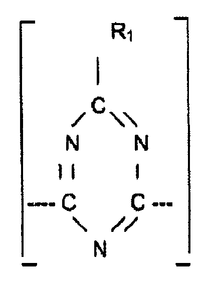
R₁ = un -NH₂, un -NH-CHR₂-O-R₃, un -NH-CHR₂-O-R₄-OH, un -CH₃, un -C₃H₇, un -C₆H₅, un -OH, un phtalimido-, un succinimido-, un -NH-CO-C₅-C₁₈-alkyle, un -NH-C₅-C₁₈-alkylène-OH, un -NH-CHR₂-O-C₅-C₁₈-alkylène-NH₂, un -NH-C₅-C₁₈-alkylène-NH₂, un -NH-CHR₂-O-R₄-OR₄-O-CHR₂-NH-, un -NH-CHR₂-NH-, un -NH-CHR₂-O-C₅-C₁₈-alkylène-NH-, un -NH-C₅-C₁₈-alkylène-NH-, un - NH-CHR₂-O-CHR₂-NH-,
R₂ = un H, un alkyle en C₁-C_{7 ;}
R₃ = un alkyle en C₁-C₁₈, un H ;
R₄ = un alkylène en C₂-C₁₈, un -CH(CH₃)-CH₂-O-C₂-C₁₂-alkylène-O-CH₂-CH(CH₃)-, un -CH(CH₃)-CH₂-O-C₂-C₁₂-arylène-O-CH₂-CH(CH₃)-, un -[CH₂-CH₂-O-CH₂-CH₂]ₙ-, un -[CH₂-CH(CH₃)-O-CH₂-CH(CH₃)]ₙ-, un -[-O-CH₂-CH₂-CH₂-CH₂-]ₙ-, un -[(CH₂)₂₋₈-O-CO-C₆-C₁₄-arylène-CO-O-(CH₂)₂₋₈-]ₙ-, un -[(CH₂)₂₋₈-O-CO-C₂-C₁₂-alkylène-CO-O-(CH₂)₂₋₈-]ₙ-,
où n = de 1 à 200 ;
- des séquences renfermant des groupes siloxane du type 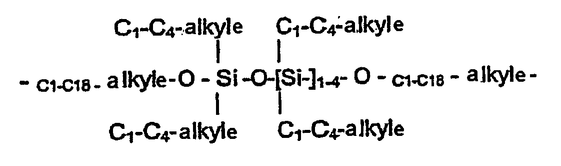
- des séquences de polyesters renfermant des groupes siloxane du type
-[(X)ᵣ-O-CO-(Y)ₛ-CO-O-(X)ᵣ]-,
dans lesquelles
X = un {(CH₂)₂₋₈-O-CO-C₆-C₁₄-arylène-CO-O-(CH₂)₂₋₈-} ou un {(CH₂)₂₋₈-O-CO-C₂-C₁₂-alkylène-CO-O-(CH₂)₂₋₈-} ; Y = un 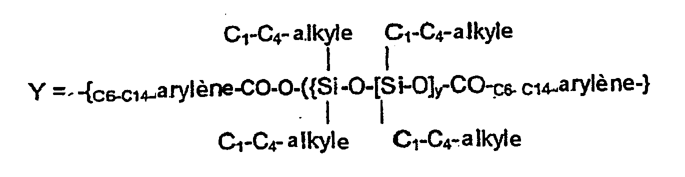 ou un 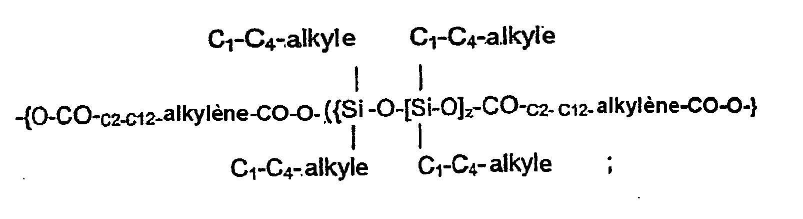 r = de 1 à 70 ; s = de 1 à 70 ; et y = de 3 à 50 ;
- des séquences de polyéthers renfermant des groupes siloxane du type 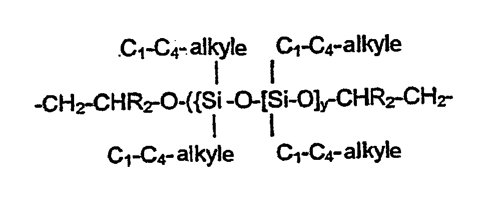 dans lesquelles R₂ = un H ; un alkyle en C₁-C₄ ; et y = de 3 à 50 ;
- des séquences à base de produits d'addition d'oxyde d'alkylène et de la mélamine du type séquences 2-amino-4,6-di-C₂-C₄-alkylène-amino-1,3,5-triazine ;
- des séquences de phénol-éthers à base de phénols bivalents et de diols en C₂-C₈ du type séquences -C₂-C₈-alkylène-O-C₆-C₁₈-arylène-O-C₂-C₈-alkylène- ;
sont liés par des éléments de pontage -NH-CHR₂-NH- ou -NH-CHR₂-O-R₄-O-CHR₂-NH- et -NH-CHR₂-NH- ainsi que, éventuellement, -NH-CHR₂-O-CHR₂-NH-, -NH-CHR₂-O-C₅-C₁₈-alkylène-NH- ou -NH-C₅-C₁₈-alkylène-NH-, pour donner lieu à des éthers polytriaziniques à 4-1000 noyaux présentant une structure linéaire et/ou ramifiée,
où, dans les éthers polytriaziniques, le rapport molaire des substituants R₃ : R₄ = de 20 : 1 à 1 : 20, la proportion des liaisons de segments triaziniques par des éléments de pontage -NH-CHR₃-O-R₄-O-CHR₃-NH- est de 5 à 95 % en moles, et les éthers polytriaziniques peuvent renfermer jusqu'à 20 % en masse de diols du type HO - R₄ - OH.

2. Compositions selon la revendication 1, **caractérisées en ce que** les polycondensats de résines mélaminiques sont des mélanges d'éthers polytriaziniques fusibles à 4-300 noyaux.

3. Compositions selon la revendication 1, **caractérisées en ce que** les agents de durcissement thermo-inductibles du type acide sulfonique bloqué de formule générale
R₁-SO₂-O-R₂ (I)
sont des acides sulfoniques bloqués dans lesquels les substituants
R₁ = un aryle en C₆-C₁₀ ou un C₇-C₁₂-arylalkyle non substitué ou substitué par un ou plusieurs des substituants halogène, halogénoalkyle en C₁-C₄, alkyle en C₁-C₁₆, alcoxy en C₁-C₄, C₁-C₄-alkyl-CO-NH-, phényl-CO-NH-, benzoyle ou nitro,
R₂ = un 4-nitrobenzyle, un pentafluorobenzyle, 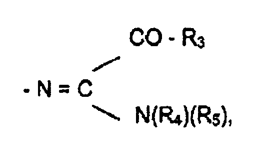
R₃ = un alkyle en C₁-C₁₂, un halogénoalkyle en C₁-C₄, un alcényle en C₂-C₆, un cycloalkyle en C₅-C₁₂, un aryle en C₆-C₁₀ et/ou un C₇-C₁₂-arylalkyle non substitué ou substitué par un ou plusieurs des substituants halogène, halogénoalkyle en C₁-C₉, alkyle en C₁-C₁₆, alcoxy en C₁-C₁₄, C₁-C₄-alkyl-CO-NH-, phényl-CO-NH-, benzoyle ou nitro, un alcoxy en C₁-C₈, un cycloalcoxy en C₅-C₈, un phénoxy ou un H₂N-CO-NH-, un -CN, un alkyloyle en C₂-C₅, un benzoyle, un C₂-C₅-alcoxycarbonyle, un phénoxycarbonyle, un morpholino-, un pipéridino-, un alkyle en C₁-C₁₂, un halogénoalkyle en C₁-C₄, un alcényle en C₂-C₆, un cycloalkyle en C₅-C₁₂, un aryle en C₆-C₁₀ non substitué ou substitué par un ou plusieurs des substituants halogène, halogénoalkyle en C₁-C₄, alkyle en C₁-C₁₆, alcoxy en C₁-C₄, C₁-C₄-alkyl-CO-NH-, phényl-CO-NH-, benzoyle ou nitro, un C₇-C₁₂-arylalkyle, un alcoxy en C₁-C₈, un C₅-C₈-cycloalcoxy-, un phénoxy-, ou un H₂N-CO-NH-,
R₄ = un H, un alkyle en C₁-C₁₂, un phényle, un alcanoyle en C₂-C₉ ou un benzyle,
R₅ = un H, un alkyle en C₁-C₁₂ ou un cyclohexyle,
ou R₃ et R₄ ou R₅, conjointement avec les atomes auxquels ils sont liés, forment un noyau à 5-8 chaînons qui peut être condensé par 1 ou 2 radicaux benzo.

4. Compositions- selon la revendication 1, **caractérisées en ce que** les esters alkyliques en C₁-C₁₂ ou les esters hydroxyalkyliques en C₂-C₈ d'acides carboxyliques aromatiques en C₇-C₁₄ sont le phtalate de dibutyle, l'ester diglycolique d'acide phtalique et/ou l'ester glycolique d'acide triméllitique.

5. Compositions selon la revendication 1, **caractérisées en ce que** les sels de mélamine ou de guanamines avec des acides carboxyliques aliphatiques en C₁-C₁₆ sont le formiate de mélamine, le citrate de mélamine, le maléate de mélamine, le fumarate de mélamine et/ou le butyrate d'acétoguanamine.

6. Compositions selon la revendication 1, **caractérisées en ce que** les anhydrides, les mono-esters ou les mono-amides d'acides dicarboxyliques en C₄-C₂₀ sont l'anhydride maléique, l'anhydride succinique, l'anhydride phtalique, des maléates de mono-C₁-C₁₈-alkyle, le mono-amide d'acide maléique ou des mono-C₁-C₁₈-alkylamides d'acide maléique.

7. Compositions selon la revendication 1, **caractérisées en ce que** les mono-esters ou les mono-amides de copolymères d'anhydrides dicarboxyliques en C₄-C₂₀ éthyléniquement insaturés et de monomères éthyléniquement insaturés du type oléfines en C₂-C₂₀ et/ou composés vinylaromatiques en C₈-C₂₀ sont des mono-esters ou des mono-amides de copolymères d'anhydride maléique et de α-oléfines en C₃-C₈ du type isobutène, diisobutène et/ou 4-méthylpentène et/ou styrène présentant un rapport molaire anhydride maléique/α-oléfine en C₃-C₈ ou styrène ou mélanges de monomères correspondants de 1 : 1 à 1 : 5.

8. Compositions selon la revendication 1, **caractérisées en ce que** les sels de C₁-C₁₂-alkylamines ou d'alcanolamines avec des acides carboxyliques aliphatiques en C₁-C₁₈, aromatiques en C₇-C₁₄ ou alkylaromatiques ou d'acides inorganiques du type acide chlorhydrique, acide sulfurique ou acide phosphorique sont le chlorure d'éthanolammonium, le maléate de triéthylammonium, le phosphate de diéthanolammonium et/ou le p-toluènesulfonate d'isopropylammonium.

9. Procédé de production de produits à partir des compositions selon l'une ou plusieurs des revendications 1 à 8, produites par mise en oeuvre à l'état fondu, dans lequel les compositions sont fondues dans des malaxeurs continus à des températures de la masse de 105 à 220°C et avec des temps de séjour de 2 à 12 minutes, et par durcissement des polycondensats fusibles de résines mélaminiques conformément à des procédés habituels de mise en oeuvre pour des polymères thermoplastiques,
A) sont appliquées sous forme d'une masse fondue sur une unité lisseuse et soutirées sous forme de plaque par l'intermédiaire de bandes transporteuses et coupées, ou scellées sur des nappes plates comprenant des feuilles métalliques, des feuilles en matière plastique, des nappes en papier ou des nappes textiles et soutirées sous forme de composites à composants multiples et finies,
ou
B) sont déchargées à travers une filière profilée et soutirées sous forme d'un profilé ou d'un matériau en plaque, coupées et finies,
ou
C) sont déchargées à travers une filière annulaire, soutirées sous forme d'un tuyau par injection d'air, coupées et finies,
ou
D) après l'introduction d'agents gonflants, sont déchargées à travers une filière à fonte large et soutirées sous forme d'un matériau en plaque expansé,
ou
E) sont déchargées à travers la filière à fonte large d'une unité de revêtement de tuyaux et scellées sur le tuyau en rotation à l'état fondu liquide,
ou
F) dans des machines de moulage par injection, de préférence avec des vis à trois zones d'une longueur de vis de 18 à 24 D, avec des vitesses d'injection élevées et à des températures de moule de 5 à 70°C, sont transformées en pièces moulées par injection,
ou
G) dans des unités de filature par fusion, sont extrudées au moyen d'une pompe à fusion par l'intermédiaire de l'instrument à capillaire dans la cuve de soufflage et soutirées sous forme de filaments ou séparées par le procédé de soufflage par fusion sous forme de fibres, ou déchargées sous forme d'une masse fondue par le procédé de filature par rotation dans une chambre à champ de cisaillement avec des agents dispersants organiques en formant des fibrides, et soumises à des traitements supplémentaires dans des installations en aval,
ou
H) sont ajoutées en quantité mesurée par le procédé d'infusion de résine dans un moule ouvert avec le produit fibreux semi-fini et mises sous forme de stratifiers par la technologie du sac sous vide,
ou
I) sont injectées par le procédé d'injection de résine dans un moule verrouillable, dans lequel se trouvent des préformes de matière textile, et mises en forme de composantes et durcies,
ou
K) sont utilisées pour l'imprégnation à l'état fondu d'ébauches de composantes produites par le procédé d'enroulement, le procédé de tressage ou le procédé de pultrusion,
et, pour un durcissement total, les produits sont éventuellement soumis à un post-traitement thermique à des températures de 180 à 220°C et avec des temps de séjour de 30 à 120 minutes.
